(19) **Europäisches Patentamt / European Patent Office / Office européen des brevets**

(11) **EP 4 422 181 A1**

(12) **EUROPEAN PATENT APPLICATION**
published in accordance with Art. 153(4) EPC

(43) Date of publication:
**28.08.2024 Bulletin 2024/35**

(21) Application number: **22884068.2**

(22) Date of filing: **20.10.2022**

(51) International Patent Classification (IPC):
**H04N 19/54** $^{(2014.01)}$ **H04N 19/513** $^{(2014.01)}$
**H04N 19/172** $^{(2014.01)}$ **H04N 19/132** $^{(2014.01)}$
**H04N 19/70** $^{(2014.01)}$

(52) Cooperative Patent Classification (CPC):
**H04N 19/132; H04N 19/172; H04N 19/513;**
**H04N 19/54; H04N 19/70**

(86) International application number:
**PCT/KR2022/016047**

(87) International publication number:
**WO 2023/068846 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 KR 20210139829**

(71) Applicant: **LG Electronics Inc.**
**Yeongdeungpo-gu**
**Seoul 07336 (KR)**

(72) Inventor: **LEE, Sooyeon**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **POINT CLOUD DATA TRANSMISSION DEVICE AND METHOD, AND POINT CLOUD DATA RECEPTION DEVICE AND METHOD**

(57) A point cloud data transmission method according to embodiments comprises the steps of encoding point cloud data, and transmitting the encoded point cloud data and signaling information, wherein the step of encoding the point cloud data can comprise the steps of: dividing the points of the point cloud data into a plurality of sub-groups; setting the number of points to be sampled for each divided sub-group; and compressing the point cloud data by sampling each sub-group on the basis of the number of points to be sampled for each sub-group.

FIG. 17

NumsubBlock3 = 10

NumsubBlock2 = 5000

NumsubBlock1 = 8000

NumsubBlock0 = 358

numSubBlock = 4
totalNumObject = 13368
totalSamplingPoint = 100

EP 4 422 181 A1

**Description**

[Technical Field]

Embodiments relate to a method and apparatus for processing point cloud content.

[Background Art]

Point cloud content is content represented by a point cloud, which is a set of points belonging to a coordinate system representing a three-dimensional space (or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

[Disclosure]

[Technical Problem]

An object of the present disclosure devised to solve the above-described problems is to provide a point cloud data transmission device, a point cloud data transmission method, a point cloud data reception device, and a point cloud data reception method for efficiently transmitting and receiving a point cloud.
Another object of the present disclosure is to provide a point cloud data transmission device, a point cloud data transmission method, a point cloud data reception device, and a point cloud data reception method for addressing latency and encoding/decoding complexity.
Another object of the present disclosure is to provide a point cloud data transmission device, a point cloud data transmission method, a point cloud data reception device, and a point cloud data reception method for efficiently transmitting and receiving a geometry-point cloud compression (G-PCC) bitstream.
Another object of the present disclosure is to provide a point cloud data transmission device, a point cloud data transmission method, a point cloud data reception device, and a point cloud data reception method capable of increasing compression efficiency of point cloud data based on similarity between different frames in compressing the point cloud data.
Another object of the present disclosure is to provide a point cloud data transmission device, a point cloud data transmission method, a point cloud data reception device, and a point cloud data reception method capable of increasing compression efficiency by applying a non-uniform sampling method in estimating global motion between frames of point cloud data captured by LIDAR equipment.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting the encoded point cloud data and signaling information.
The encoding of the point cloud data may include splitting points of the point cloud data into a plurality of sub-groups, setting a number of points to be sampled for each of the split sub-groups, and compressing the point cloud data by performing sampling for each of the sub-groups based on the set number of points to be sampled in each of the sub-groups.
In one embodiment, the splitting may include splitting the points of the point cloud data into a plurality of sub-groups based on a z-axis.
In one embodiment, the setting may include setting the number of points to be sampled for each of the split sub-groups based on a total number of points of the point cloud data, a number of points contained in each of the sub-groups, and a total number of points to be sampled in the point cloud data.
In one embodiment, the compressing may include determining whether to apply a global motion matrix to a corresponding one of the sub-groups based on the number of points contained in each of the sub-groups.
In one embodiment, the signaling information may include information for identifying whether non-uniform sampling is applied to at least the point cloud data, information for identifying the number of the split sub-groups, and

information for identifying, for each of the sub-groups, whether the global motion matrix is applied to the corresponding one of the sub-groups.

A device for transmitting point cloud data according to embodiments may include an encoder configured to encode point cloud data, and a transmitter configured to transmit the encoded point cloud data and signaling information.

In one embodiment, the encoder may be configured to split points of the point cloud data into a plurality of sub-groups, set a number of points to be sampled for each of the split sub-groups, and compress the point cloud data by performing sampling for each of the sub-groups based on the set number of points to be sampled in each of the sub-groups.

In one embodiment, the encoder may split the points of the point cloud data into a plurality of sub-groups based on a z-axis.

In one embodiment, the encoder may set the number of points to be sampled for each of the split sub-groups based on a total number of points of the point cloud data, a number of points contained in each of the sub-groups, and a total number of points to be sampled in the point cloud data.

In one embodiment, the encoder may determine whether to apply a global motion matrix to a corresponding one of the sub-groups based on the number of points contained in each of the sub-groups.

In one embodiment, the signaling information may include information for identifying whether non-uniform sampling is applied to at least the point cloud data, information for identifying the number of the split sub-groups, and information for identifying, for each of the sub-groups, whether the global motion matrix is applied to the corresponding one of the sub-groups.

A method of receiving point cloud data, the method according to embodiments may include receiving point cloud data and signaling information, decoding the point cloud data based on the signaling information, and rendering the decoded point cloud data.

In one embodiment, the decoding of the point cloud data may include splitting the received point cloud data into a plurality of sub-groups based on the signaling information, and performing decoding for each of the split sub-groups.

In one embodiment, the decoding may include determining whether a global motion matrix is applied to a corresponding one of the sub-groups based on the signaling information, and performing global motion compensation on the corresponding one of the sub-groups based on a result of the determination.

In one embodiment, the decoding may further include performing local motion compensation on the corresponding sub-group on which the global motion compensation has been performed.

In one embodiment, the signaling information may include information for identifying whether non-uniform sampling has been applied to at least the point cloud data, information for identifying the number of the split sub-groups, and information for identifying, for each of the sub-groups, whether the global motion matrix is applied to the corresponding one of the sub-groups.

In one embodiment, the signaling information may further include index information for identifying each of the sub-groups.

[Advantageous Effects]

A point cloud data transmission method, a point cloud data transmission device, a point cloud data reception method, and a point cloud data reception device according to embodiments may provide a good-quality point cloud service.

A point cloud data transmission method, a point cloud data transmission device, a point cloud data reception method, and a point cloud data reception device according to embodiments may achieve various video codec methods.

A point cloud data transmission method, a point cloud data transmission device, a point cloud data reception method, and a point cloud data reception device according to embodiments may provide universal point cloud content such as a self-driving service (or an autonomous driving service).

A point cloud data transmission method, a point cloud data transmission device, a point cloud data reception method, and a point cloud data reception device according to embodiments may perform space-adaptive partition of point cloud data for independent encoding and decoding of the point cloud data, thereby improving parallel processing and providing scalability.

A point cloud data transmission method, a point cloud data transmission device, a point cloud data reception method, and a point cloud data reception device according to embodiments may perform encoding and decoding by partitioning the point cloud data in units of tiles and/or slices, and signal necessary data therefore, thereby improving encoding and decoding performance of the point cloud.

A point cloud data transmission method, a point cloud data transmission device, a point cloud data reception method, and a point cloud data reception device according to embodiments may suggest a non-uniform sampling method and a method of determining whether to apply a global motion matrix for global motion estimation and motion compensation of inter-frame motion prediction of point cloud content, thereby improving compression performance of the point cloud data.

A point cloud data transmission method and a point cloud data transmission device may divide points of point cloud data into a plurality of sub-blocks, sample a different number of points according to the number of points included in the corresponding sub-block for each sub-block, and particularly, sample more points in a sub-block containing points at a more important position, thereby improving the accuracy of global motion estimation.

A point cloud data reception method and a point cloud data reception device according to embodiments may perform different global motion compensation according to whether a result of global motion estimation is applied for each sub-block, thereby reducing a bitstream size and a decoding time.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure.

FIG. 1 illustrates an exemplary point cloud content providing system according to embodiments.
FIG. 2 is a block diagram illustrating a point cloud content providing operation according to embodiments.
FIG. 3 illustrates an exemplary process of capturing a point cloud video according to embodiments.
FIG. 4 illustrates an exemplary block diagram of point cloud video encoder according to embodiments.
FIG. 5 illustrates an example of voxels in a 3D space according to embodiments.
FIG. 6 illustrates an example of octree and occupancy code according to embodiments.
FIG. 7 illustrates an example of a neighbor node pattern according to embodiments.
FIG. 8 illustrates an example of point configuration of a point cloud content for each LOD according to embodiments.
FIG. 9 illustrates an example of point configuration of a point cloud content for each LOD according to embodiments.
FIG. 10 illustrates an example of a block diagram of a point cloud video decoder according to embodiments.
FIG. 11 illustrates an example of a point cloud video decoder according to embodiments.
FIG. 12 illustrates a configuration for point cloud video encoding of a transmission device according to embodiments.
FIG. 13 illustrates a configuration for point cloud video decoding of a reception device according to embodiments.
FIG. 14 illustrates an exemplary structure operatively connectable with a method/device for transmitting and receiving point cloud data according to embodiments.
FIG. 15 illustrates an example in which a group of frames (GOF) is composed of a plurality of frames according to embodiments.
FIG. 16 illustrates another example of a point cloud transmission device according to embodiments.
FIG. 17 illustrates an example in which a geometry encoder divides points in an object into a plurality of sub-groups according to embodiments.
FIG. 18 illustrates an example of a process of a geometry encoder determining whether a global motion matrix is applied according to embodiments.
FIG. 19 illustrates an example of a geometry encoder operation of a point cloud reception device according to embodiments.
FIG. 20 illustrates an example of a bitstream structure of point cloud data for transmission/reception according to embodiments.
FIG. 21 illustrates an embodiment of a syntax structure of a sequence parameter set according to embodiments.
FIG. 22 illustrates an embodiment of a syntax structure of a geometry parameter set according to embodiments.
FIG. 23 illustrates an embodiment of a syntax structure of an attribute parameter set according to embodiments.
FIG. 24 illustrates an embodiment of a syntax structure of a geometry data unit header according to embodiments.
FIG. 25 illustrates another example of a point cloud reception device according to embodiments.
FIG. 26 illustrates an example of a geometry decoding operation of a point cloud reception device according to embodiments.
FIG. 27 is a flowchart illustrating a point cloud data transmission method according to embodiments.
FIG. 28 is a flowchart illustrating a point cloud data reception method according to embodiments.

[Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. It should be noted that the following examples are only for embodying the present disclosure and do not limit the scope of the present disclosure. What can be easily inferred by an expert in the technical field to which the present disclosure belongs from the detailed description and examples of the present disclosure is to be interpreted as being within the scope of the present disclosure.

The detailed description in this present specification should be construed in all aspects as illustrative and not restrictive. The scope of the disclosure should be determined by the appended claims and their legal equivalents, and all changes coming within the meaning and equivalency range of the appended claims are intended to be embraced therein.

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in this specification have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the following drawings and detailed description should not be construed as being limited to the specifically described embodiments, but should be construed as including equivalents or substitutes of the embodiments described in the drawings and detailed description.

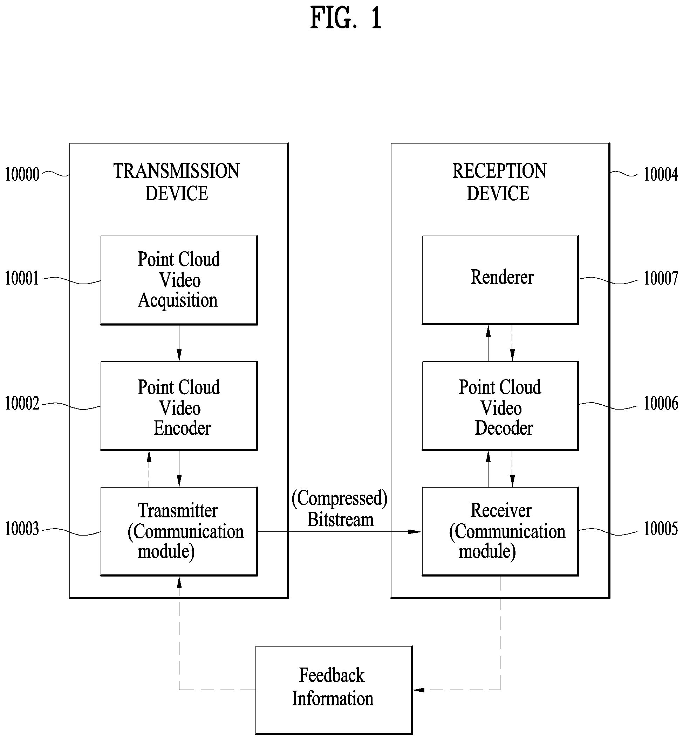

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component or module) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like).

The dotted lines in FIG. 1 represent a process of transmitting the feedback information secured by the renderer 10007. The point cloud content providing system may process (encode/decode) point cloud data based on the feedback information. Accordingly, the point cloud video decoder 10006 may perform a decoding operation based on the feedback information. The reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmitting device, a transmitter, a transmission system, or the like, and the reception device 10004 may be called a decoder, a receiving device, a receiver, a reception system, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

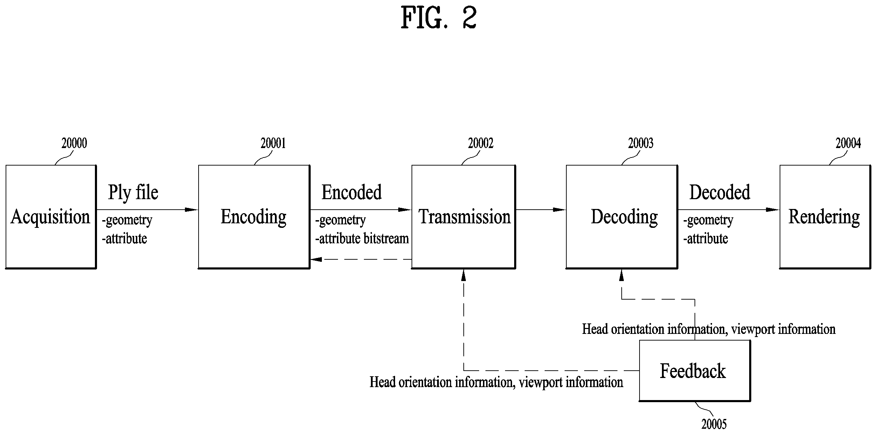

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquisition unit 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

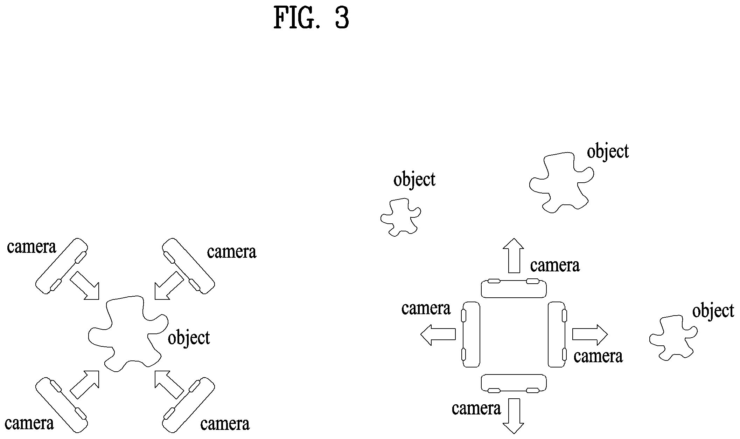

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in FIG. 3, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

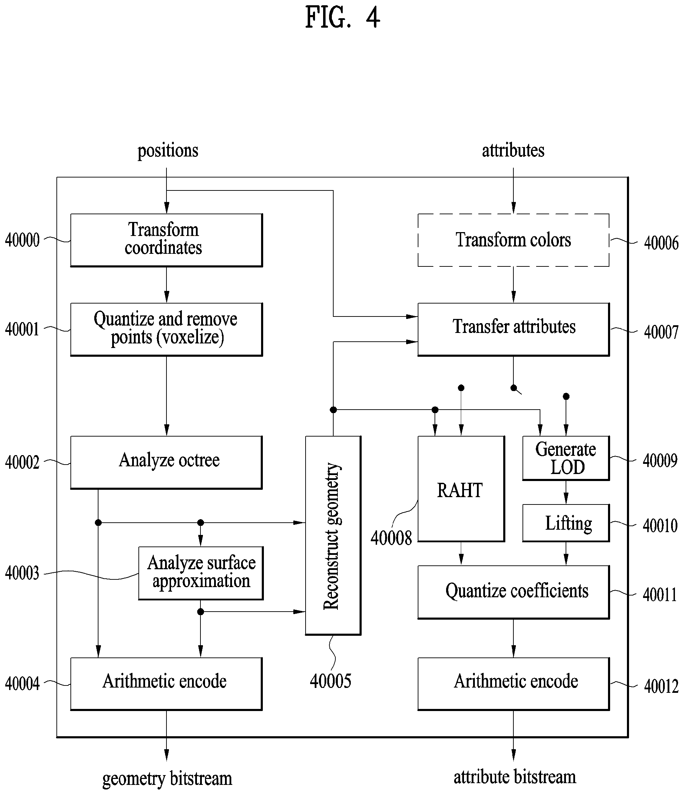

FIG. 4 illustrates an exemplary point cloud video encoder according to embodiments.

FIG. 4 shows an example of the point cloud video encoder 10002 of FIG. 1. The point cloud video encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud video encoder may perform geometry encoding and attribute encoding. The geometry encoding is performed before the attribute encoding.

The point cloud video encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder

(Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry information. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. The voxelization means a minimum unit representing position information in 3D space. Points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center point of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD). The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud video encoder of FIG. 4 may be implemented by hardware including one or more processors or integrated circuits configured to communicate with one or more memories included in the point cloud content providing apparatus, software, firmware, or a combination thereof. The one or more processors may perform at least one of the operations and/or functions of the elements of the point cloud video encoder of FIG. 4 described above. Additionally, the one or more processors may operate or execute a set of software programs and/or instructions for performing the operations and/or functions of the elements of the point cloud video encoder of FIG. 4. The one or more memories according to the embodiments may include a high speed random access memory, or include a non-volatile memory (e.g., one or more magnetic disk storage devices, flash memory devices, or other non-volatile solid-state memory devices).

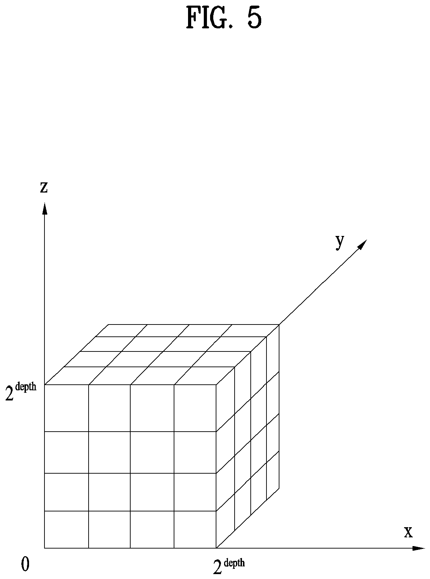

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud video encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and ($2^d$, $2^d$, $2^d$) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

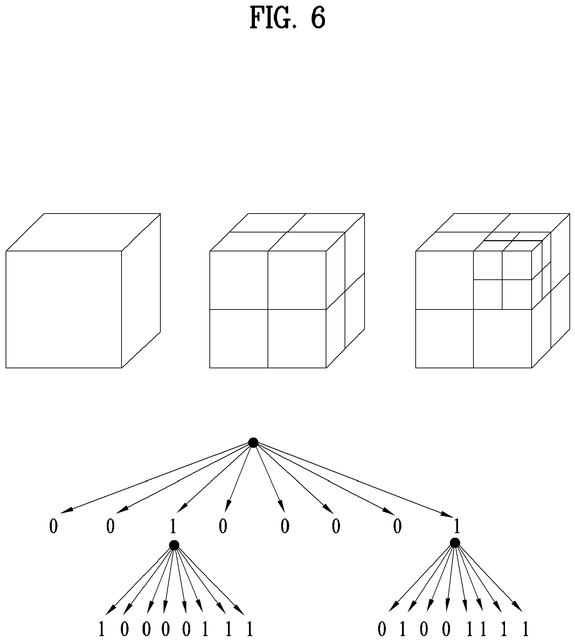

FIG. 6 shows an example of an octree and occupancy code according to embodiments.

As described with reference to FIGS. 1 to 4, the point cloud content providing system (point cloud video encoder 10002) or the octree analyzer 40002 of the point cloud video encoder performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in Equation 1. In Equation 1, ($x^{int}_n$, $y^{int}_n$, $z^{int}_n$) denotes the positions (or position values) of quantized points.

### Equation 1

$$\mathrm{d} = Ceil\left(Log2\left(Max\left(x_n^{int}, y_n^{int}, z_n^{int}, n = 1, \dots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud video encoder (for example, the arithmetic encoder 40004) according to the embodiments may perform entropy encoding on the occupancy codes. In order to increase the compression efficiency, the point cloud video encoder may perform intra/inter-coding on the occupancy codes. The reception device (for example, the reception device 10004 or the point cloud video decoder 10006) according to the embodiments reconstructs the octree based on the occupancy codes.

The point cloud video encoder (for example, the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud video encoder according to the embodiments may skip voxelization and perform direct coding to directly code the positions of points included in the specific region. The coordinates of a direct coding point according to the embodiments are referred to as direct coding mode (DCM). The point cloud video encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud video decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud video encoder (or the arithmetic encoder 40004) according to the embodiments may perform entropy coding on the positions (or position values) of the points.

The point cloud video encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud video encoder according to the embodiments may specify a level at which trisoup geometry encoding is to be applied. For example, when the specific level is equal to the depth of the octree, the point cloud video encoder does not operate in the trisoup mode. In other words, the point cloud video encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud video encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud video encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed according to Equation 2 by: i) calculating the centroid value of each vertex, ii) subtracting the center value from each vertex value, and iii) estimating the sum of the squares of the values obtained by the subtraction.

Equation 2

$$\text{①} \begin{bmatrix} \mu_x \\ \mu_y \\ \mu_z \end{bmatrix} = \frac{1}{n}\sum_{i=1}^{n} \begin{bmatrix} x_i \\ y_i \\ z_i \end{bmatrix} \quad \text{②} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad \text{③} \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

Then, the minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table 1] Triangles formed from vertices ordered 1,...,n

[Table 1]

| *n* | Triangles |
| --- | --- |
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud video encoder according to the embodiments may voxelize the refined vertices. In addition, the point cloud video encoder may perform attribute encoding based on the voxelized positions (or position values).

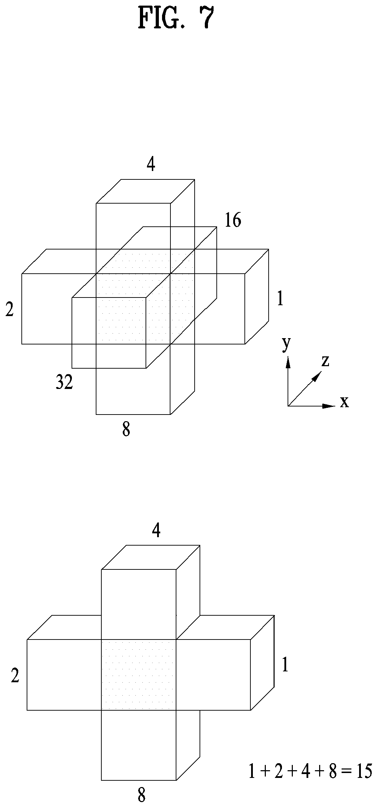

FIG. 7 shows an example of a neighbor node pattern according to embodiments.

In order to increase the compression efficiency of the point cloud video, the point cloud video encoder according to the embodiments may perform entropy coding based on context adaptive arithmetic coding.

As described with reference to FIGS. 1 to 6, the point cloud content providing system or the point cloud video encoder 10002 of FIG. 1, or the point cloud video encoder or arithmetic encoder 40004 of FIG. 4 may perform entropy coding on the occupancy code immediately. In addition, the point cloud content providing system or the point cloud video encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud video encoder according to the embodiments determines occupancy of neighbor nodes of each node of the octree and obtains a value of a neighbor pattern. The neighbor node pattern is used to infer the occupancy pattern of the node. The up part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The down part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud video encoder may perform coding according to the neighbor node pattern value (for example, when the neighbor node pattern value is 63, 64 kinds of coding may be performed). According to embodiments, the point cloud video encoder may reduce coding complexity by changing a neighbor node pattern value (for example, based on a table by which 64 is changed to 10 or 6).

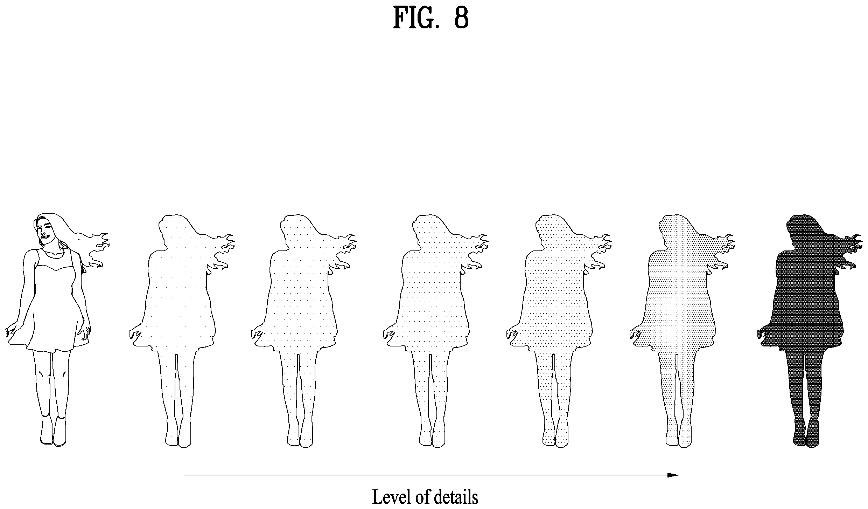

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud video encoder (for example, the LOD generator 40009) may classify (reorganize or group) points by LOD. FIG. 8 shows the point cloud content corresponding to LODs. The leftmost picture in FIG. 8 represents original point cloud content. The second picture from the left of FIG. 8 represents distribution of the points in the lowest LOD, and the rightmost picture in FIG. 8 represents distribution of the points in the highest LOD. That is, the points in the lowest LOD are sparsely distributed, and the points in the highest LOD are densely distributed. That is, as the LOD rises in the direction pointed by the arrow indicated at the bottom of FIG. 8, the space (or distance) between points is narrowed.

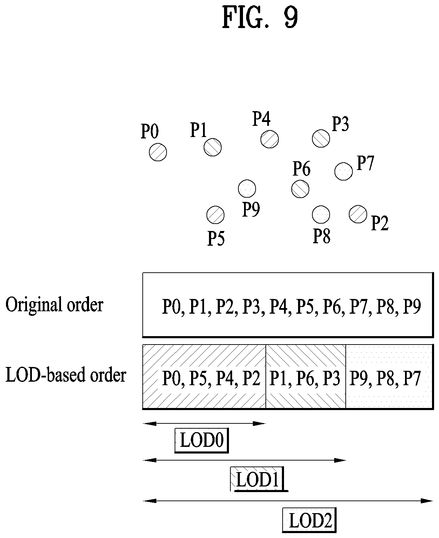

FIG. 9 illustrates an example of point configuration for each LOD according to embodiments.

As described with reference to FIGS. 1 to 8, the point cloud content providing system, or the point cloud video encoder (for example, the point cloud video encoder 10002 of FIG. 1, the point cloud video encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud video encoder, but also by the point cloud video decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud video encoder according to the embodiments may perform prediction transform coding based on LOD, lifting transform coding based on LOD, and RAHT transform coding selectively or in combination.

The point cloud video encoder according to the embodiments may generate a predictor for points to perform prediction transform coding based on LOD for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (for example, the coefficient quantizer 40011) may quantize and inversely quantize the residual of each point (which may be called residual attribute, residual attribute value, attribute prediction residual value or prediction error attribute value and so on) obtained by subtracting a predicted attribute (or attribute value) each point from the attribute (i.e., original attribute value) of each point. The quantization process performed for a residual attribute value in a transmission device is configured as shown in table 2. The inverse quantization process performed for a residual attribute value in a reception device is configured as shown in table 3.

[Table 2]

```
int PCCQuantization(int value, int quantStep)
{
if( value >=0) {
return floor(value / quantStep + 1.0 / 3.0);
} else {
return -floor(-value / quantStep + 1.0 / 3.0);
}
}
```

[Table 3]

```
int PCCInverseQuantization(int value, int quantStep)
{
if( quantStep ==0) {
return value;
} else {
return value * quantStep;
}
}
```

When the predictor of each point has neighbor points, the point cloud video encoder (e.g., the arithmetic encoder 40012) according to the embodiments may perform entropy coding on the quantized and inversely quantized residual attribute values as described above. When the predictor of each point has no neighbor point, the point cloud video encoder according to the embodiments (for example, the arithmetic encoder 40012) may perform entropy coding on the attributes of the corresponding point without performing the above-described operation.

The point cloud video encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud video encoder (e.g., coefficient quantizer 40011) according to the embodiments quantizes the predicted attribute values. In addition, the point cloud video encoder (e.g., the arithmetic encoder 40012) performs entropy coding on the quantized attribute values.

The point cloud video encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud video encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

Equation 3 below represents a RAHT transformation matrix. In Equation 3, $g_{l_{x,y,z}}$ denotes the average attribute value of voxels at level $l$. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l\ 2x+1,y,z}$ are $w1 = W_{l_{2x,y,z}}$ and $W2 = w_{l_{2x+1,y,z}}$.

### Equation 3

$$\begin{bmatrix} g_{l-1\ x,y,z} \\ h_{l-1\ x,y,z} \end{bmatrix} = T_{w1\ w2} \begin{bmatrix} g_{l\ 2x,y,z} \\ g_{l\ 2x+1,y,z} \end{bmatrix} \quad T_{w1\ w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (for example, encoding by the arithmetic encoder 40012). The weights are calculated as $w_{l-1_{x,y,z}} = w_{l_{2x,y,z}} + w_{l_{2x+1,y,z}}$. The root node is created through the $g_{1_{0,0,0}}$ and $g_{1_{0,0,1}}$ as Equation 4.

### Equation 4

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

The value of gDC is also quantized and subjected to entropy coding like the high-pass coefficients.

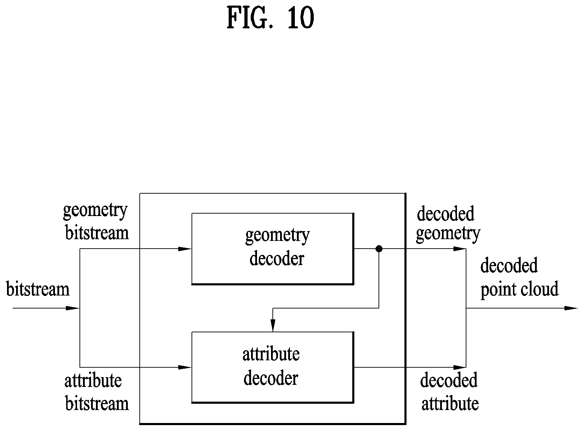

FIG. 10 illustrates a point cloud video decoder according to embodiments.

The point cloud video decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud video decoder may receive a geometry bitstream and an attribute bitstream contained in one or more bitstreams. The point cloud video decoder includes a geometry decoder and an attribute decoder. The geometry decoder performs geometry decoding on the geometry bitstream and outputs decoded geometry. The attribute decoder performs attribute decoding on the attribute bitstream based on the decoded geometry, and outputs decoded attributes. The decoded geometry and decoded attributes are used to reconstruct point cloud content (a decoded point cloud).

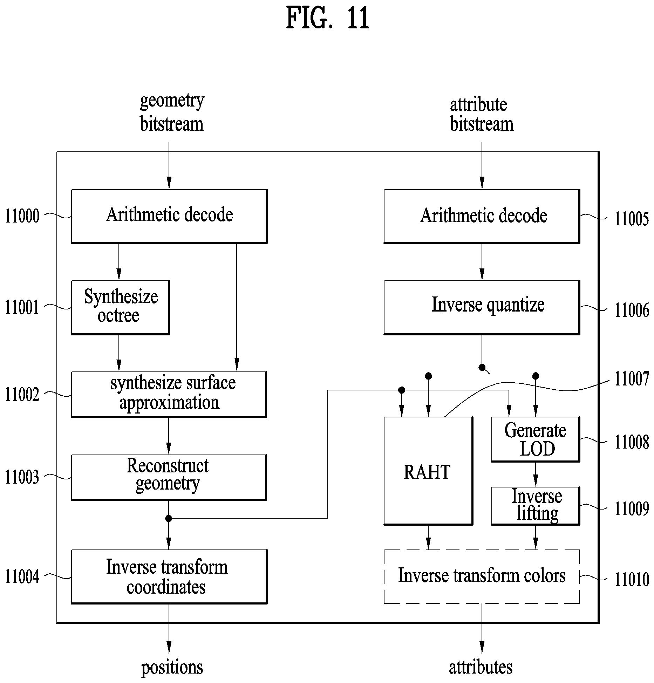

FIG. 11 illustrates a point cloud video decoder according to embodiments.

The point cloud video decoder illustrated in FIG. 11 is an example of the point cloud video decoder illustrated in FIG. 10, and may perform a decoding operation, which is an inverse process of the encoding operation of the point cloud video encoder illustrated in FIGS. 1 to 9.

As described with reference to FIGS. 1 and 10, the point cloud video decoder may perform geometry decoding and attribute decoding. The geometry decoding is performed before the attribute decoding.

The point cloud video decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct decoding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud video encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud video encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud video encoder.

Although not shown in the figure, the elements of the point cloud video decoder of FIG. 11 may be implemented by hardware including one or more processors or integrated circuits configured to communicate with one or more memories included in the point cloud content providing apparatus, software, firmware, or a combination thereof. The one or more processors may perform at least one or more of the operations and/or functions of the elements of the point cloud video decoder of FIG. 11 described above. Additionally, the one or more processors may operate or execute a set of software programs and/or instructions for performing the operations and/or functions of the elements of the point cloud video decoder of FIG. 11.

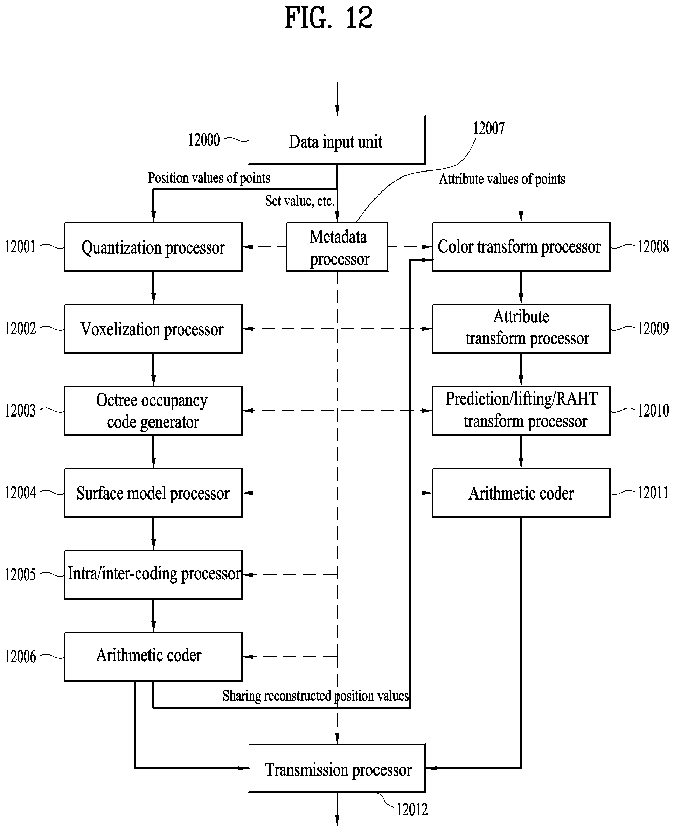

FIG. 12 illustrates a transmission device according to embodiments.

The transmission device shown in FIG. 12 is an example of the transmission device 10000 of FIG. 1 (or the point cloud video encoder of FIG. 4). The transmission device illustrated in FIG. 12 may perform one or more of the operations and methods the same as or similar to those of the point cloud video encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquisition unit 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud video encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud video encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 40012.

The transmission processor 12012 according to the embodiments may transmit each bitstream containing encoded geometry and/or encoded attributes and metadata, or transmit one bitstream configured with the encoded geometry and/or the encoded attributes and the metadata. When the encoded geometry and/or the encoded attributes and the metadata according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS or tile inventory) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

The slice is a series of a syntax element representing in whole or in part of the coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

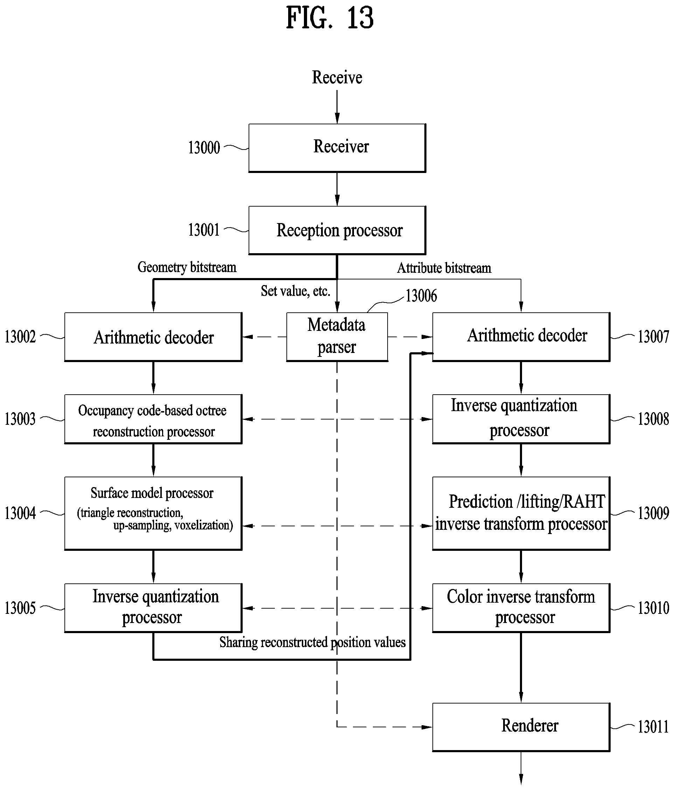

FIG. 13 illustrates a reception device according to embodiments.

The reception device illustrated in FIG. 13 is an example of the reception device 10004 of FIG. 1 (or the point cloud video decoder of FIGS. 10 and 11). The reception device illustrated in FIG. 13 may perform one or more of the operations and methods the same as or similar to those of the point cloud video decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, up-sampling, voxelization) based on the surface model method. The surface model processor 1302 performs an operation the same as or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

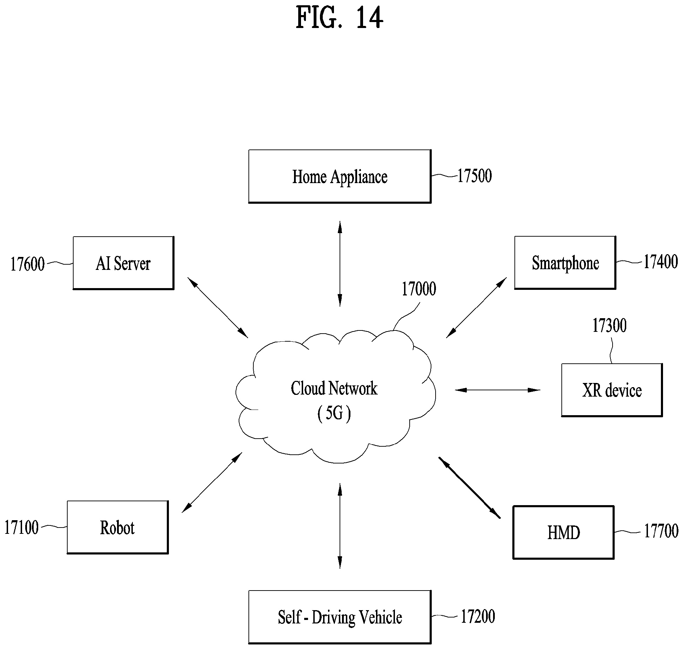

FIG. 14 shows an exemplary structure operatively connectable with a method/device for transmitting and receiving point cloud data according to embodiments.

The structure of FIG. 14 represents a configuration in which at least one of a server 17600, a robot 17100, a self-driving vehicle 17200, an XR device 17300, a smartphone 17400, a home appliance 17500, and/or a head-mount display (HMD) 17700 is connected to a cloud network 17100. The robot 17100, the self-driving vehicle 17200, the XR device 17300, the smartphone 17400, or the home appliance 17500 is referred to as a device. In addition, the XR device 17300 may correspond to a point cloud compressed data (PCC) device according to embodiments or may be operatively connected to the PCC device.

The cloud network 17000 may represent a network that constitutes part of the cloud computing infrastructure or is present in the cloud computing infrastructure. Here, the cloud network 17000 may be configured using a 3G network, 4G or Long Term Evolution (LTE) network, or a 5G network.

The server 17600 may be connected to at least one of the robot 17100, the self-driving vehicle 17200, the XR device 17300, the smartphone 17400, the home appliance 17500, and/or the HMD 17700 over the cloud network 17000 and may assist in at least a part of the processing of the connected devices 17100 to 17700.

The HMD 17700 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 17100 to 17500 to which the above-described technology is applied will be described. The devices 17100 to 17500 illustrated in FIG. 14 may be operatively connected/coupled to a point cloud data transmission device and reception according to the above-described embodiments.

<PCC+XR>

The XR/PCC device 17300 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 17300 may analyze 3D point cloud data or image data acquired through various sensors or from an external device and generate position data and attribute data about 3D points. Thereby, the XR/PCC device 17300 may acquire information about the surrounding space or a real object, and render and output an XR object. For example, the XR/PCC device 17300 may match an XR object including auxiliary information about a recognized object with the recognized object and output the matched XR object.

<PCC+Self-driving+XR>

The self-driving vehicle 17200 may be implemented as a mobile robot, a vehicle, an unmanned aerial vehicle, or the like by applying the PCC technology and the XR technology.

The self-driving vehicle 17200 to which the XR/PCC technology is applied may represent a self-driving vehicle provided with means for providing an XR image, or a self-driving vehicle that is a target of control/interaction in the XR image. In particular, the self-driving vehicle 17200 which is a target of control/interaction in the XR image may be distinguished from the XR device 17300 and may be operatively connected thereto.

The self-driving vehicle 17200 having means for providing an XR/PCC image may acquire sensor information from sensors including a camera, and output the generated XR/PCC image based on the acquired sensor information. For example, the self-driving vehicle 17200 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 17200 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud compression data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, the point cloud data may include a set of points, and each point may have a geometry (referred to also as geometry information) and an attribute (referred to as attribute information). The geometry information represents three-dimensional (3D) position information (xyz) of each point. That is, the position of each point is represented by parameters in a coordinate system representing a 3D space (e.g., parameters (x, y, z) of three axes, X, Y, and Z axes, representing a space). The attribute information represents color (RGB, YUV, etc.), reflectance, normal vectors, transparency, etc. of the point.

According to embodiments, a point cloud data encoding process includes compressing geometry information based on an octree, a trisoup, or prediction and compressing attribute information based on geometry information reconstructed (or decoded) with position information changed through compression. A point cloud data decoding process includes receiving an encoded geometry bitstream and an encoded attribute bitstream, decoding geometry information based on an octree, a trisoup, or prediction, and decoding attribute information based on geometry information reconstructed through a decoding operation.

The present disclosure is directed to improving compression efficiency by removing redundant information based on correlation between frames in compressing point cloud data based on the octree.

The present disclosure is directed to improving compression efficiency based on the similarity of information between different frames in compressing point cloud data based on the octree.

In other words, according to the present disclosure, when point cloud data is composed of consecutive frames, high coding efficiency may be achieved by removing redundant information based on high correlation between neighboring frames.

According to embodiments, the geometry encoder constructs an octree based on the positions of the input points and performs geometry compression based on the octree. The prediction for geometry compression may be performed within a frame, or may be performed between frames. In the present disclosure, the former is referred to as intra-frame prediction and the latter is referred to as inter-frame prediction.

According to embodiments, inter-frame prediction is to predict the entirety or part of a current frame based on information having a high similarity to the current frame in a frame on which coding has been performed. The inter-frame prediction is a prediction method using motion between multiple frames acquired over time, and may be performed through motion vector estimation or motion estimation.

Here, the motion estimation may be divided into global motion estimation for calculating a motion vector by rotating, moving, enlarging and/or reducing the entire frame, and local motion estimation for predicting a motion of a partial region of the frame or an obj ect.

That is, the inter-frame prediction (or inter-prediction) calculates a motion vector based on the similarity between the point cloud data of the reference frame and the point cloud data of the current frame, and predicts the point cloud data of the current frame using the motion vector.

In other words, a motion present between frames may be defined in a 3D space composed of, for example, x, y, and z, and a motion between frames may be defined as a global motion vector. In contrast, different local motions may be present in a frame, and may be defined as local motion vectors.

As described above, the point cloud content providing system may employ one or more cameras (e.g., an infrared camera capable of securing depth information, an RGB camera capable of extracting color information corresponding to the depth information, etc.), a projector (e.g., an infrared pattern projector to secure depth information), a light detection and ranging (LiDAR) or the like to generate point cloud content (also referred to as point cloud data)..

LiDAR refers to equipment configured to measure the distance by measuring the time taken for the irradiated light to reflect off an object and return. It provides precise three-dimensional information about the real world as point cloud data over a wide area and long distance. Such large-volume point cloud data may be widely used in various fields where computer vision technology is employed, such as autonomous vehicles, robots, and 3D map production. That is, the LiDAR equipment uses a radar system configured to measure the coordinates of a position of an object by emitting a laser pulse and measuring the time taken for the laser pulse to reflect on the object (i.e., a reflector) in order to generate point cloud content. According to embodiments, the depth information may be extracted through the LiDAR equipment. The point cloud content generated through the LiDAR equipment may be composed of multiple frames, and the multiple frames may be integrated into one piece of content.

The present disclosure proposes a method of increasing compression efficiency of point cloud data having a plurality of frames as described above.

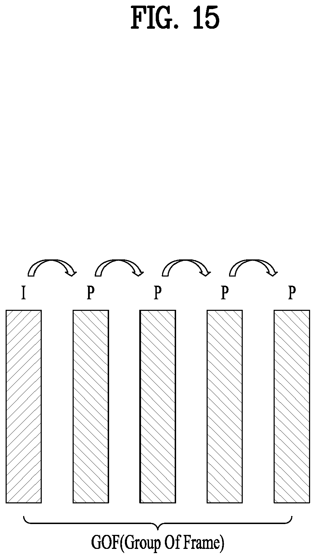

FIG. 15 illustrates an example in which a group of frames (GOF) is composed of a plurality of frames according to embodiments.

According to embodiments, in the inter-frame prediction technique for compressing the point cloud data, the GOF is basically configured in an IPPP structure as shown in FIG. 15. Here, I is an intra-prediction frame for determining similarity in one frame for prediction, and P is a frame for inter prediction performed based on a relationship between frames. The number of frames configured depends on the number of GoFs. When the prediction is completed for a GoF period, the prediction is structured to start again from the I-frame without referencing the previous frame.

The most basic technique for predicting the motion of the geometry information about the octree structure between frames in the GoF structure in which point cloud data is composed of a plurality of frames is largely divided into global motion estimation and local motion estimation. Here, the global motion estimation is to compensate for the motion of the entire frame, and the local motion estimation is to predict the motion at a specific position in the frame. That is, a global motion vector may refer to a vector of a change in the entire motion obtained by comparing consecutive frames, for example, comparing a reference frame (or a previous frame) with the current frame, and a local motion vector may refer to a vector of a change in motion in a specific region.

In the current G-PCC, points included in a node are sorted in a per node basis from a specific node size in an octree structure for global motion estimation, and a least mean square (LMS) is calculated between points sampled in the sorted current frame and previous frame (i.e., a predictor) to find an optimal matrix. This matrix is referred to as a global motion matrix. By applying the global motion matrix to the entire predictor, a predicted result for the current frame may be obtained.

On the contrary, in the local motion estimation, the optimal motion vector ($(\vec{x},\vec{y},\vec{z})$) with the minimum RDO is found by comparing the values of rate-distortion optimization (RDO) of points in a specific node (or prediction unit (PU)) in the current frame with points in a search window that contains that node at the same position in the predictor and is as large as a threshold. When it is advantageous to split a node and find each local motion for child nodes, the node (or PU) is split, a motion vector for each node (or PU) is signaled, and a motion vector is applied to the predictor.

In particular, when global motion estimation is performed, points are sampled at a uniform position as many as a predetermined number in a current frame, and points closest to the sampled points are extracted from a reference frame. Then, a motion vector matrix is found through the LMS of the extracted points. When the number of repetitions is greater than or equal to 2, a result of applying a motion vector matrix found in a previous attempt to a reference frame is used again as a reference for sampling to repeat the same process. In this process, the current point, which is the target, is sampled at a uniform position. Accordingly, there are limitations to extracting more points at important positions and estimating global motion, even if the motion occurs around those positions. That is, when the points are sampled, the points may be uniformly sampled without considering the data distribution. As a result, the points the sampled points may not reflect the entire points, and noise may be mixed at the sampled positions.

Therefore, the present disclosure proposes a method of non-uniformly sampling points according to the positions of the points in global motion estimation of the point cloud. The present disclosure also proposes a method of determining whether the global motion predicted through non-uniform point sampling. That is, the present disclosure proposes a method of non-uniformly sampling points according to the positions of the points in estimating the global motion of the point cloud, and a method of partially applying global motion.

Specifically, the present disclosure proposes a non-uniform point sampling method for a point cloud captured by LIDAR for effective compression of the point cloud having a plurality of frames, and a method of determining whether a global motion predicted through non-uniform point sampling is applied. In the present disclosure, the term "non-uniform" is used interchangeably with the terms "unequal" and "asymmetric."

To this end, the cloud data transmission method/device according to embodiments may sample points according to a data distribution. The point cloud data may be divided into one or more subgroups to sample points according to the data distribution. In this case, the number of points sampled may differ among the subgroups. In addition, whether to apply a global motion matrix may be determined differently among the sub-groups. In addition, by comparing the results before and after applying the global motion matrix for each subgroup, it may be determined whether to apply the global motion matrix for each subgroup. In addition, when the number of points included in a sub-group is less than or equal to a predetermined number, the sub-group may be excluded from the targets of point sampling and application of global motion matrix.

In the present disclosure, a sub-group may be referred to as a sub-block.

In addition, a method/device for transmitting or receiving point cloud data according to embodiments may be referred to simply as a method/device.

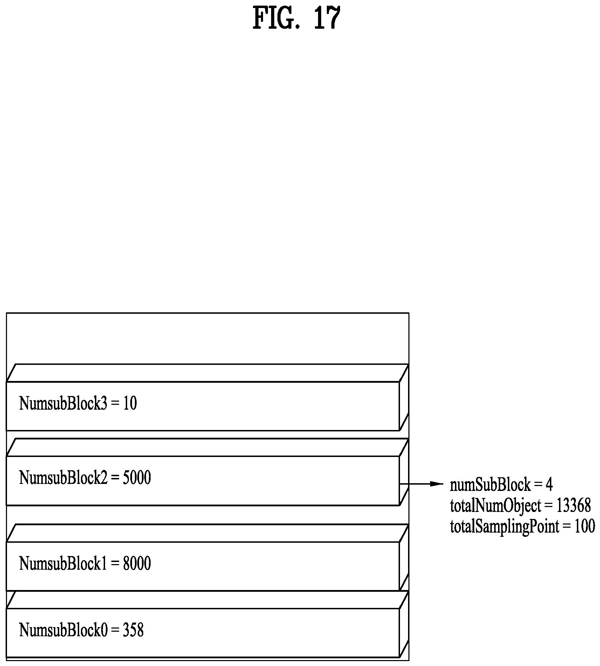

The point cloud data transmission method/device according to the embodiments is construed as a term referring to the transmission device 10000, point cloud video encoder 10002, and transmitter 10003 of FIG. 1, the acquisition 20000-encoding 20001-transmission 20002 of FIG. 2, the point cloud video encoder of FIG. 4, the transmission device of FIG. 12, the device of FIG. 14, the transmission device of FIG. 17, and the like.

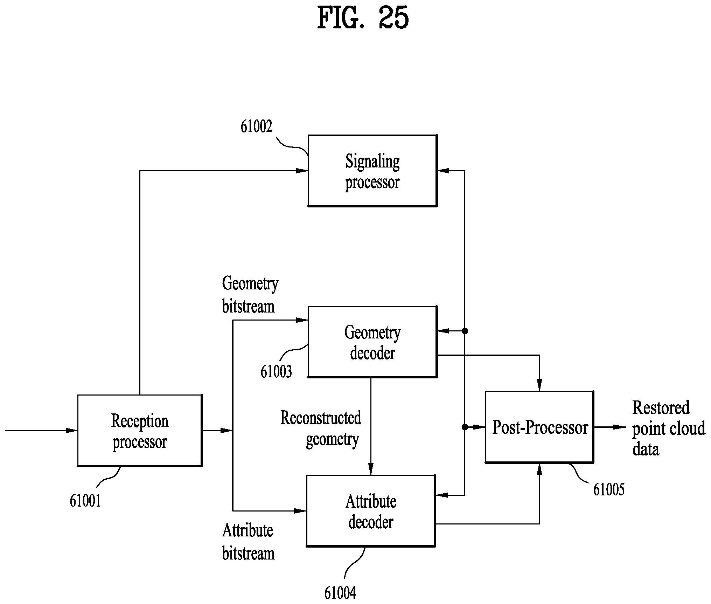

The point cloud data reception method/device according to the embodiments is construed as a term referring to the reception device 10004, receiver 10005, and point cloud video decoder 10006 of FIG. 1, the transmission 20002-decoding 20003-rendering 20004 of FIG. 2, the decoder of FIG. 10, the point cloud video decoder of FIG. 11, the reception device of FIG. 13, the device of FIG. 14, the reception device of FIG. 25, and the like.

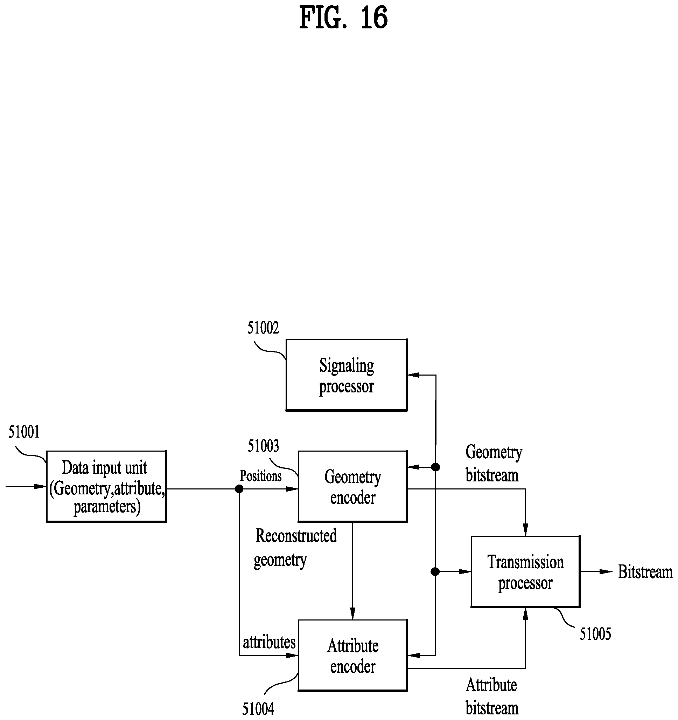

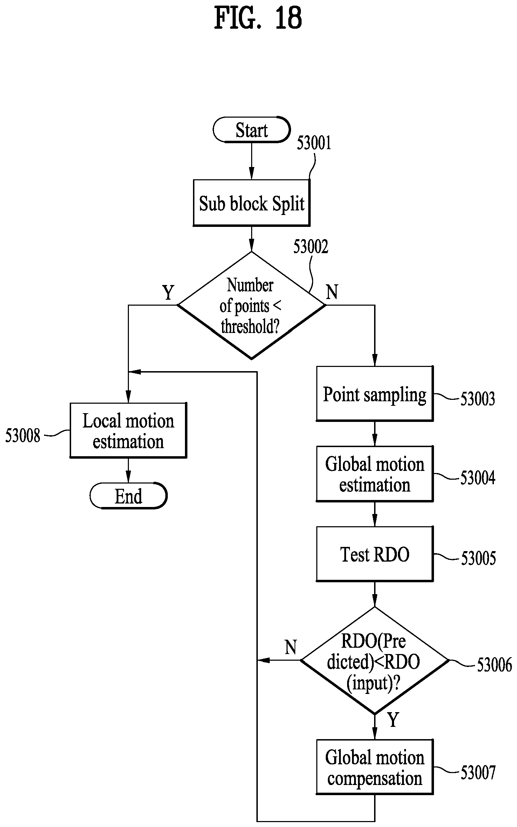

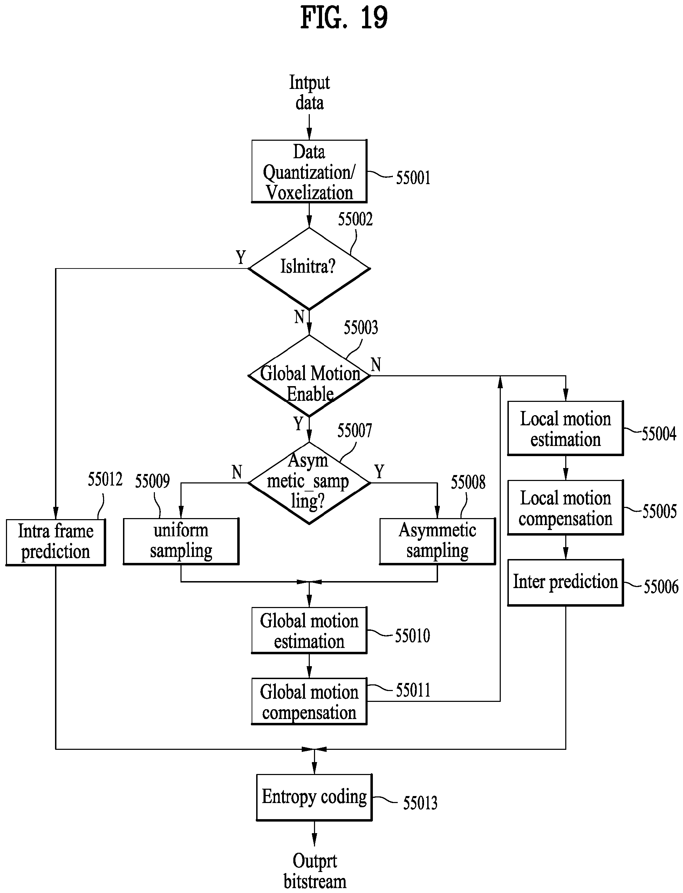

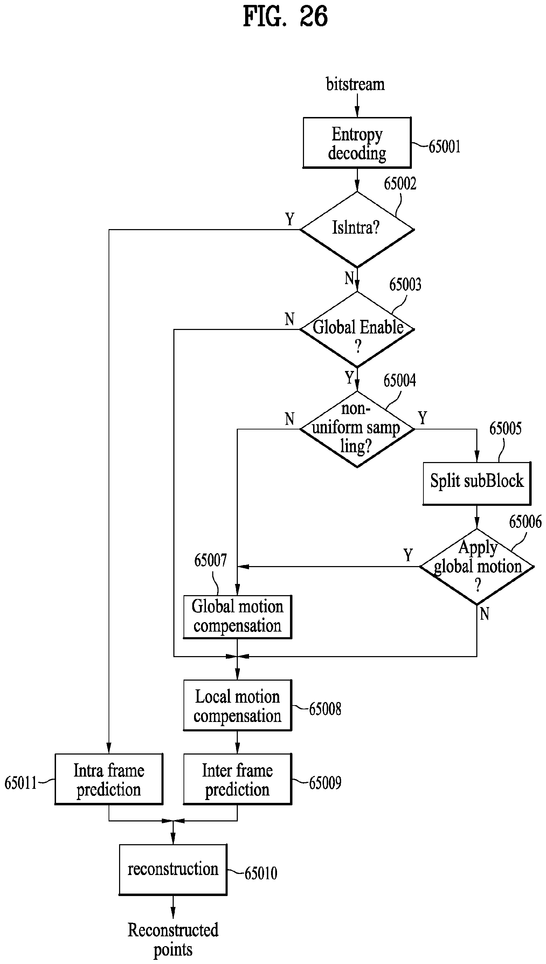

According to embodiments, the encoding of the point cloud data may be performed by the point cloud video encoder 10002 of FIG. 1, the encoder 20001 of FIG. 2, the point cloud video encoder of FIG. 4, the point cloud video encoder of FIG. 12, the geometry encoder 51003 of FIG. 16, the geometry encoding of FIG. 18, or the geometry encoding of FIG. 19. The decoding of the point cloud data according to embodiments may be performed by the point cloud video decoder 10006 of FIG. 1, the decoder 20003 of FIG. 2, the point cloud video decoder of FIG. 11, the point cloud video decoder of FIG. 13, the geometry decoder 61003 of FIG. 25, or the geometry decoding of FIG. 26. FIGS. 16, 18, 19, 25, and 26 will be described in detail later.

According to embodiments, geometry data, geometry information, position information, and the like constituting the point cloud data are construed as having the same meaning. In addition, attribute data, attribute information, and the like constituting point cloud data are construed as having the same meaning.

FIG. 16 illustrates another example of a point cloud transmission device according to embodiments. The elements of the point cloud transmission device illustrated in FIG. 16 may be implemented by hardware, software, a processor, and/or a combination thereof.

According to embodiments, the point cloud transmission device may include a data input unit 51001, a signaling processor 51002, a geometry encoder 51003, an attribute encoder 51004, and a transmission processor 51005.

The geometry encoder 51003 and the attribute encoder 51004 may perform some or all of the operations described in the point cloud video encoder 10002 of FIG. 1, the encoding 20001 of FIG. 2, the point cloud video encoder of FIG. 4, and the point cloud video encoder of FIG. 12.

The data input unit 51001 according to embodiments receives or acquires point cloud data. The data input unit 51001 may perform some or all of operations of the point cloud video acquisition unit 10001 in FIG. 1 or some or all of the operations of the data input unit 12000 in FIG. 12. The data input unit 51001 may capture point cloud data using LiDAR. Points in a LiDAR-based point cloud have two types of motion: global motion caused by a vehicle equipped with a LiDAR sensor, and local motion generated by objects that have motion along the time axis, such as people, animals, etc.

The data input unit 51001 outputs positions of points of point cloud data to the geometry encoder 51003, and outputs attributes of points of point cloud data to the attribute encoder 51004. Parameters are output to the signaling processor 51002. In some embodiments, the parameters may be provided to the geometry encoder 51003 and the attribute encoder 51004.

The geometry encoder 51003 constructs an octree based on the positions of the input points and performs geometry compression based on the octree. The prediction for geometry compression may be performed within a frame, or may be performed between frames. In the present disclosure, the former is referred to as intra-frame prediction and the latter is referred to as inter-frame prediction.

The geometry encoder 51003 divides points of input point cloud data into a plurality of sub-groups, calculates the number of points to be sampled in each of the divided sub-groups, and performs sampling. After determining whether to the global motion matrix for each sub-group, global motion estimation and/or local motion estimation is performed, the geometry information is compressed. Details of the sampling method and the method for partial application of the global motion will be described later.

The geometry encoder 51003 performs entropy encoding on the compressed geometry information and outputs the encoded information to the transmission processor 51005 in the form of a geometry bitstream.

The geometry encoder 51003 reconfigures the geometry information based on positions changed through compression, and outputs the reconfigured (or decoded) geometry information to the attribute encoder 51004.

The attribute encoder 51004 compresses attribute information based on positions at which geometry encoding is not performed and/or reconfigured geometry information. According to an embodiment, the attribute information may be coded using any one or a combination of one or more of RAHT coding, LOD-based predictive transform coding, and lifting transform coding. The attribute encoder 51004 performs entropy encoding on the compressed attribute information and outputs the information to the transmission processor 51005 in the form of an attribute bitstream.

The signaling processor 51002 may generate and/or processes signaling information necessary for encoding/decoding/rendering of the geometry information and attribute information and provide the generated and/or processed signaling information to the geometry encoder 51003, the attribute encoder 51004, and/or the transmission processor 51005. Alternatively, the signaling processor 51002 may be provided with the signaling information generated by the geometry encoder 51003, the attribute encoder 51004, and/or the transmission processor 51005. The signaling processor 51002 may provide information fed back from the reception device (e.g., head orientation information and/or viewport information) to the geometry encoder 51003, the attribute encoder 51004, and/or the transmission processor 51005.

In the present disclosure, the signaling information may be signaled and transmitted in units of a parameter set (a sequence parameter set (SPS), a geometry parameter set (GPS), an attribute parameter set (APS), and a tile parameter set (TPS) (also referred to as a tile inventory). In addition, the signaling information may be signaled and transmitted in units of coding units (or compression units or prediction units) of each image, such as slices or tiles. In addition, it may be signaled and transmitted in units of motion vector estimation, such as a layer group or a sub-group.

The transmission processor 51005 may perform the same or similar operation and/or transmission method as or to the operation and/or transmission method of the transmission processor 12012 of FIG. 12 and perform the same or similar operation and/or transmission method as or to the transmitter 1003 of FIG. 1. For a detailed description, refer to the description of FIG. 1 or FIG. 12 and the detailed description will be omitted herein.

The transmission processor 51005 may multiplex the geometry bitstream of a slice unit output from the geometry encoder 51003, the attribute bitstream of a slice unit output from the attribute encoder 51004, and the signaling bitstream output from the signaling processor 51002 into one bitstream. The multiplexed bitstream may be transmitted without change or may be encapsulated in a file or a segment to be transmitted. In an embodiment of the present disclosure, the file is in an ISOBMFF file format.

According to embodiments, the file or the segment may be transmitted to the reception device or stored in a digital storage medium (e.g., a USB drive, SD, CD, DVD, Blu-ray disc, HDD, SSD, etc.). The transmission processor 51005 according to the embodiments may communicate with the reception device through wired/wireless communication through a network such as 4G, 5G, or 6G. In addition, the transmission processor 51005 may perform a necessary data processing operation depending on a network system (e.g., a 4G, 5G, or 6G communication network system). The transmission processor 51005 may transmit encapsulated data according to an on-demand scheme.

According to embodiments, compression-related information is included in the header of the SPS, GPS, APS, and/or geometry data unit (also referred to as a geometry slice bitstream) by at least one of the signaling processor 51002, the geometry encoder 51003, and the transmission processor 51005 and may be transmitted.

Hereinafter, a method for non-uniform point sampling according to positions of points and a method of partially applying a global motion according to positions of points in estimating a global motion of a point cloud by the geometry encoder 51003 will be described in detail.

A method for non-uniform point sampling according to the importance of a position or a purpose for global motion estimation in a current frame is carried out as follows.

When points classified as an object occupying most of the motion in a point cloud acquired using the LiDAR sensor are defined as x: width, y: depth, and z: height, most of the object is located at a position where the z value is small, and the number of points decreases as the z value increases. In the present disclosure, based on this feature, the number of points to be sampled may be varied along the z-axis.

To this end, the geometry encoder 51003 groups n points among the points classified as an object (that is, points included in the object) along the z-axis, and the grouped points are referred to as a group, a sub-group, or a sub-block. In other words, the points classified as an object may be divided into n groups (or sub-groups or sub-blocks) on the z-axis. Here, the value of n may be preset or may be received as signaling information.

The geometry encoder 51003 calculates the number of points included in each sub-group generated by grouping n points along the z-axis among the points classified as an object. Subsequently, in order to sample points to be used in estimating the global motion is in the current frame, the number of points to be sampled (i.e., extracted) in each sub-group is determined by multiplying the ratio of the number of points in each sub-group and the total number of the points classified as the object by a predetermined sampling number.

Once the number of points to be sampled (i.e., extracted) in each sub-group is determined through the above process, points may be extracted at equal positions in each sub-group.

The extracted points may then be used as target points of the current frame in estimating the global motion.

FIG. 17 illustrates an example in which the geometry encoder 51003 divides points in an object into a plurality of sub-groups based on a z-axis according to embodiments.

That is, FIG. 17 illustrates an example in which the total number of points in an object is 13368, the object is divided into four sub-groups (i.e., sub-blocks), and the number of points to be sampled in the object is 100. In this case, each sub-group has an index of 0 to 3. Further, the number of points included in a first sub-group (i.e., sub-block) (NumsubBlock0) is 358, the number of points included in a second subgroup (i.e., sub-block) (NumsubBlock1) is 8000, the number of points included in a third subgroup (i.e., sub-block) (NumsubBlock2) is 5000, and the number of points included in a fourth subgroup (i.e., sub-block) (NumsubBlock3) is 358.

According to embodiments, the geometry encoder 51003 finds the total number of points of a point cloud classified as an object and the minimum (min) and maximum (max) values on the z-axis, uniformly divides the object into sub-blocks (or sub-groups) for sampling the object based on the received numSubBlock (i.e., the number of sub-blocks to be divided), and searches for points included in each of the sub-blocks as many as numSubBlock.

In this case, the total number of points to be sampled may be determined in the system or by a user. Here, the total number of points to be sampled (i.e., points extracted from the object) means a total sampling number that may be allowed in the object.

That is, the number of points to be sampled in each sub-block is calculated based on the total sampling number.

The number of points to be sampled in each sub-block may be calculated using Equation 5 below.

Equation 5

$$numsamplingPoint = int\left(\frac{NumsubBlock}{totalNumObject}\, totalSamplingPoint\right)$$

In the embodiment of FIG. 17, the total number of points to be sampled (totalSamplingPoint) among the points classified as the object is 100, the total number of points classified as the object (totalNumObject) is 13368, and the number of divided sub-blocks (numSubBlock) is 4. Each sub-block has one of 0 to 3 as an index thereof, and the number of points included in each sub-block is 358, 8000, 5000, and 10, respectively.

When the above conditions are applied to Equation 5, the number of points to be sampled in each sub-block is 2, 59, 37, and 0, respectively. That is, the number of points to be sampled in the first sub-group (i.e., sub-block) (NumsubBlock0) is 2, the number of points to be sampled in the second sub-group (i.e., sub-block) (NumsubBlock1) is 59, the number of points to be sampled in the third sub-group (i.e., sub-block) (NumsubBlock2) is 37, and the number of points to be sampled in the fourth sub-group (i.e., sub-block) (NumsubBlock3) is 0.

Once the number of points to be sampled in each sub-block is determined, the geometry encoder 51003 may sample points in an ISO metric scheme in each sub-block according to the existing method. Here, the ISO metric scheme refers to extracting points at equal positions (that is, at equal intervals or constant interval) in each sub-block.

When points for global motion estimation are sampled according to the above-described method, more points may be considered in the region occupying most of the motion, thereby improving the accuracy of global motion estimation.

The above-described method may be applied regardless of whether the coordinates are Cartesian coordinates or spherical coordinates. The above-described sampling method may be applied even when inter-frame prediction of the attribute is performed. That is, while the geometry compression is described as being used for a position compression method based on an octree structure, it may also be used for attribute compression having an octree structure or geometry/attribute compression having a structure other than the octree.

Until now, only a simple ratio of the number of points included in each sub-block among the entire points is considered. The geometry encoder 51003 may apply weights to extract more points from sub-blocks that contain many points, while determining sub-blocks that contain points fewer than a specific number of points as outliers and excluding the same from the global motion estimation. For example, more than 59 points may be extracted by applying the highest weight to the second sub-group (i.e., sub-block) (NumsubBlock1) containing 8000 points. In contrast, points may be extracted at a larger ratio in a sub-block containing fewer points.

According to embodiments, the position of a sub-block used in the compression of the geometry information may be inherited for attribute coding.

If the specific sub-block is excluded from the global motion estimation, the points included in the corresponding block may not be applied to the global motion matrix. Whether to apply the global motion matrix for each sub-block may be signaled to the signaling information. In the present disclosure, the geometry compression-related information may include information indicating whether a global motion matrix is applied for each sub-block.

That is, even if global motion estimation is performed after sampling points in each sub-block, performance may not be improved as a result of applying global motion estimation to each sub-block. Therefore, according to an embodiment of the present disclosure, if the performance obtained as a result of applying the global motion estimation to each sub-block is lower than the performance obtained with a result before the global motion estimation is applied, the global motion matrix may not be applied to the corresponding sub-block. In other words, if the performance obtained as a result of applying the global motion estimation to each sub-block is worse than the performance obtained with the result before the global motion estimation is applied, the corresponding sub-block is excluded from the global motion estimation. Whether to apply the global motion matrix may be signaled in the signaling information for each sub-block.

FIG. 18 illustrates an example of a process of the geometry encoder 51003 determining whether to apply a global motion matrix according to embodiments. The elements (or blocks) illustrated in FIG. 18 may be implemented by hardware, software, a processor, and/or a combination thereof. In FIG. 18, the order of performing the elements may be changed, some elements may be omitted, and some elements may be newly added.

In FIG. 18, points of point cloud data (e.g., points classified as an object) are split into a plurality of sub-blocks based on the z-axis (operation 53001). Here, the number of sub-blocks may be determined by a system or may be determined by a user. Also, the information for identifying the number of sub-blocks may be included in the signaling information and transmitted to the receiving side. In the present disclosure, the geometry compression-related information may include the information for identifying the number of sub-blocks.

In FIG. 18, operations 53002 to 53008 are performed for each of the sub-blocks split in operation 53001.

That is, in operation 53002, it is checked whether the number of points contained in the current sub-block among the sub-blocks split in operation 53001 is less than a preset threshold.

If the number of points contained in the current sub-block is less than a preset threshold, the local motion estimation is performed without performing the global motion estimation on the current sub-block (operation 53008).

If the number of points contained in the current sub-block is not less than the preset threshold, the number of points to be sampled (or extracted) in the current sub-block is calculated by applying Equation 5, and the sampling is performed in the current sub-block as many times as the calculated number of points (operation 53003). In this case, points are sampled as many as the calculated number of points at equal positions in the current sub-block.

Global motion estimation is performed based on the points sampled in operation 53003 (operation 53004). The points sampled in operation 53003 are used as target points of a current frame in performing global motion estimation.

Once the global motion estimation is performed in operation 53004, it is determined through RDO comparison whether there is a gain or loss in applying the result of the global motion estimation to the current sub-block. In an embodiment, if it is better to not apply the result of the global motion estimation to the current sub-block, the result of the global motion estimation is not applied to the current sub-block. Otherwise, the result of the global motion estimation is applied to the current sub-block. Information (e.g., ApplyGlobalFlag) for identifying whether the result of the global motion estimation is applied to the current sub-block may be included in the signaling information and transmitted to the receiving side. In this operation, whether the result of the global motion estimation is applied is signaled for each of the split sub-blocks. In the present disclosure, the geometry compression-related information may include the information for identifying whether the result of the global motion estimation is applied to the current sub-block.

To this end, the RDO after the result of the global motion estimation performed in operation 53004 to the sub-block of the reference frame and the RDO before the result of the global motion estimation is applied are calculated (operation 53005). That is, based on the results before and after the global motion estimation is applied to the sub-block of the reference frame, the rate distortion is calculated for the point cloud at the corresponding position in the current frame (operation 53005). Then, it is checked whether the RDO after applying the result of the global motion estimation is less than the RDO before applying the result of the global motion estimation (operation 53006).

If the RDO value of the result before applying the result of the global motion estimation is greater than the RDO value obtained after the application in operation 53006, the global motion compensation is performed on the current sub-block, and then the compensation result is delivered to operation 53008 for local motion estimation (operation 53007). If the RDO value of the result before applying the result of the global motion estimation in less than the RDO value obtained after the application in operation 53006, the global motion compensation is not performed even if the current sub-block is used for the global motion estimation, and the compensation result is delivered to operation 53008 for local motion estimation 53008. That is, when the RDO value of the result before applying the result of the global motion estimation is greater than the RDO value of the result after the application of the result of the global motion estimation, the global motion matrix is applied to the current sub-block. Otherwise, the global motion matrix is not applied to the current sub-block. In operation 53008, the local motion estimation is performed on the current sub-block.

According to embodiments, the RDO may be calculated based on Equation 6 below.

$$\text{Equation 6}$$

$$RDO = Dist \; x \; \alpha + \lambda E$$

In Equation 6, the Dist denotes an average of distances between points before and after applying the global motion matrix to the points contained in the current sub-block and the points contained in the reference sub-block. Also, $\alpha$ denotes a weight for determining the degree of application of Dist to the RDO calculation, and may have a value between 0 and 1. $\lambda$ is a Lagrange multiplier. The E may be a coding value required when the global motion is entropy-coded.

In the present disclosure, the geometry compression-related information may be signaled in the SPS, GPS, APS, geometry slice header, or the like. In an embodiment, the geometry compression-related information is processed by the signaling processor 51002.

The geometry compression-related information according to embodiments may include at least one of information (sps_GME_nonUniformflag) indicating whether to perform point sampling non-uniformly, information (numSub-Block) indicating the number of sub-blocks for dividing the points of the point cloud data, information (subBlockIndex) indicating the index of a corresponding one of the sub-blocks, and weight information (samplingWeight) to be applied to a corresponding one of the sub-blocks, information (ApplyGlobalFlag) for identifying whether the result of the global motion estimation is applied to a corresponding one of the sub-blocks, information (subBlockPosition_min) indicating a point closest to the origin among vertices of a corresponding one of the sub-blocks, information (subBlockPosition_max) indicating a point farthest from the origin among vertices of a corresponding one of the sub-blocks, or information (subBlockWidth) indicating a width of a corresponding one of the sub-blocks. Since information included in the geometry compression-related information may be added, deleted or modified by one of ordinary skill in the art, the present disclosure is not limited to the above-described example.

FIG. 19 illustrates an example of a geometry encoding method for the geometry encoder 51003 according to embodiments. The elements (or blocks) shown in FIG. 19 may be implemented by hardware, software, a processor, and/or a combination thereof. In FIG. 19, the order of performing the elements may be changed, some elements may be omitted, and some elements may be newly added.

According to embodiments, when point cloud data is input to operation 55001, the input point cloud data is quantized/voxelized in operation 55001 in order to facilitate compression using predictive geometry. After the quantization/voxelization, it is determined whether intra-prediction is to be performed on the point cloud data (operation 55002). Here, whether the intra-prediction is to be performed may be provided as signaling information or may be preset.

When it is determined that the intra-prediction is to be performed in operation 55002, the intra-frame prediction is performed in operation 55012.

When it is determined that the inter-prediction is to be performed in operation 55002, it is determined whether to perform global motion estimation for the inter-prediction (operation 55003). Here, whether to perform global motion estimation for the inter-prediction may be provided as signaling information, or may be preset.

When it is determined in operation 55003 that the global motion estimation is not applied, local motion estimation is performed in operation 55004, and local motion compensation is performed based on the result of the local motion estimation (operation 55005).

When it is determined in operation 55003 that the global motion estimation is applied, it is determined whether to perform asymmetric sampling on each sub-block (operation 55007). Here, whether to perform asymmetric sampling on each sub-block may be provided as signaling information, or may be preset.

When it is determined in operation 55007 that asymmetric sampling is performed on each sub-block, points of the input point cloud data are split into a plurality of sub-blocks based on the z-axis, and the number of points to be sampled in each sub-block is calculated. Then, the points calculated for each sub-block are sampled (operation 55008). That is, as shown in Equation 5, the number of points sampled in each sub-block is determined (or calculated) based on the total number of points contained in the input point cloud data (e.g., the object), the number of points in each sub-block, and the total number of points to be sampled among the points contained in the input point cloud data. Once the number of points to be extracted from each sub-block is determined, points as many as the determined number may be extracted at equal positions in each sub-group. That is, the number of points to be sampled differs among the sub-blocks, and points are sampled (or extracted) at equal positions in each sub-block. Global motion estimation is performed for each sub-block based on the points sampled in each sub-block (operation 55010), and then global motion compensation is performed based on the result of the global motion estimation (operation 55011).

When it is determined in operation 55007 that sampling is to be uniformly performed for each sub-block, the global motion estimation is performed by performing uniform sampling on the entire region or object of the input point cloud data (operation 55010), and then global motion compensation is performed based on the result of the global motion estimation (operation 55011).

The result of the global motion compensation in operation 55011 is delivered to operation 55004 to perform local motion estimation. Local motion compensation is performed based on the result of the local motion estimation (operation 55005).

After the local motion compensation ends in operation 55005, the remaining inter-prediction function is applied in operation 55006. Then, entropy coding is performed in operation 55013 to generate an output bitstream.

As described above, upon receiving point cloud data as input, the geometry encoder 51003 quantizes/voxelizes the data to facilitate compression using predictive geometry. In addition, it is checked whether to apply intra-prediction to the point cloud data after the quantization/voxelization processing. If the frame is an intra-prediction frame, geometry intra-prediction is performed. Otherwise, it is checked whether to perform global motion estimation for the inter-prediction. If the global motion estimation is not applied, local motion estimation and local motion compensation are performed. If the global motion estimation is applied, it is determined whether to perform non-uniform sampling for each sub-block. When it is determined that non-uniform sampling is performed for each sub-block, the global motion estimation and the global motion compensation are performed after sampling different numbers of points for the respective sub-blocks. If it is determined that non-uniform sampling is not performed for each sub-block, the global motion estimation and the global motion compensation are performed by performing uniform sampling on the entire region or the object. Then, the result of the global motion compensation is delivered for local motion estimation and local motion compensation. Once the local motion estimation and local motion compensation are completed, entropy coding is performed after applying the remaining inter-prediction function, and an output bitstream is generated.

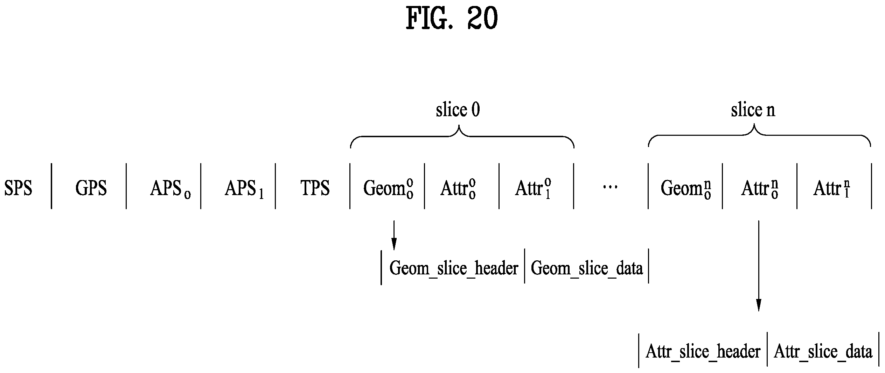

FIG. 20 illustrates an example of a bitstream structure of point cloud data for transmission/reception according to embodiments. According to embodiments, the bitstream output from the point cloud video encoder in any one of FIGS. 1, 2, 4, 12, 16, 18, and 19 may be in the form of FIG. 20.

According to embodiments, tiles or slices are provided such that the bitstream of point cloud data may be divided into regions to be processed. Each region of the bitstream according to embodiments may have different importance. Therefore, when point cloud data is divided into tiles, different filters (encoding methods) and different filter units may be applied to the tiles, respectively. When point cloud data is divided into slices, different filters and different filter units may be applied to the slices, respectively. The transmission device and method according to the embodiments may transmit point cloud data according to the bitstream structure as shown in FIG. 20, and thus may provide a method of applying different encoding operations according to importance and using an encoding method with good quality in an important region. In addition, efficient encoding and transmission according to the characteristics of point cloud data may be supported and attribute values according to user requirements may be provided.

The reception device and method according to embodiments receives point cloud data according to the bitstream structure as shown in FIG. 20, and thus a different filtering method (decoding method) may be applied for each region (region divided into tiles or slices) instead of using a complicated decoding (filtering) method for the entire point cloud data according to the processing capacity of the reception device. Accordingly, a better image quality in a region important to a user and appropriate latency on a system may be ensured.

When a geometry bitstream, an attribute bitstream, and/or a signaling bitstream (or signaling information) according to embodiments constitute one bitstream (or G-PCC bitstream) as shown in FIG. 20, the bitstream may include one or more sub-bitstreams. According to embodiments, a bitstream may contain a sequence parameter set (SPS) for signaling of a sequence level, a geometry parameter set (GPS) for signaling of geometry information coding, one or more attribute parameter sets (APSs) ($APS_0$ and $APS_1$) for signaling of attribute information coding, a tile inventory (also referred to as a TPS) for signaling at a tile level, and one or more slices (slice 0 to slice n). That is, a bitstream of point cloud data according to embodiments may include one or more tiles, wherein each tile may be a slice group including one or more slices (slice 0 to slice n). The tile inventory (i.e., TPS) may include information about each of the one or more tiles (e.g., coordinate value information and height/size information related to a tile bounding box). Each slice may include one geometry bitstream (Geom0) and/or one or more attribute bitstreams (Attr0 and Attr1). For example, slice 0 may include one geometry bitstream ($Geom0^0$) and one or more attribute bitstreams ($Attr0^0$ and $Attr1^0$).

The geometry bitstream in each slice may include a geometry slice header (geom_slice_header) and geometry slice data (geom_slice_data). According to embodiments, the geometry bitstream in each slice may be referred to as a geometry data unit, and the geometry slice header may be referred to as a geometry data unit header. Also, the geometry slice data may be referred to as geometry data unit data. According to embodiments, the geometry slice header (or geometry data unit header) may include identification information (geom_parameter_set_id) related to a parameter set included in a geometry parameter set (GPS), a tile identifier (geom_tile_id), a slice identifier (geom_slice_id), and information (geomBoxOrigin, geom_box_log2_scale, geom_max_node_size_log2, geom_num_points) about data included in the geometry slice data (geom_slice_data). geomBoxOrigin is geometry box origin information indicating the box origin of the geometry slice data, geom_box_log2_scale is information indicating a log scale of the geometry slice data, geom_max_node_size_log2 is information indicating the size of the root geometry octree node, and geom_num_points is information related to the number of points of the geometry slice data. The geometry slice data (or geometry data unit data) may include geometry information (or geometry data) related to the point cloud data in a corresponding slice.

Each attribute bitstream in each slice may include an attribute slice header (attr_slice_header) and attribute slice data (attr_slice_data). According to embodiments, the attribute bitstream in each slice may be referred to as an attribute data unit. Also, the attribute slice header may be referred to as an attribute data unit header, and the attribute slice data may be referred to as attribute data unit data. According to embodiments, the attribute slice header (or attribute data unit header) may include information about the corresponding attribute slice data (or corresponding attribute data unit), and the attribute slice data may include attribute information (also referred to as attribute data or attribute value) related to the point cloud data in the corresponding slice. When a plurality of attribute bitstreams is present in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, in encoding and/or decoding of geometry information, the parameters may be added to the GPS. In tile-based encoding and/or decoding, the parameters may be added to a tile and/or slice header.

According to embodiments, the geometry compression-related information may be signaled in at least one of the SPS, the GPS, the APS, the geometry slice header (or geometry data unit header), or the geometry slice data (or geometry data unit data).

According to embodiments, geometry compression related information may be signaled in the APS and/or the attribute slice header (also referred to as an attribute data unit header) so as to be associated with or be applied to an attribute coding method or applied to attribute coding. According to embodiments, parameters (which may be referred to metadata, signaling information, or the like) containing the geometry compression related information may be generated by a metadata processor (or metadata generator) or signaling processor of a transmission device, and may be delivered to a reception device so as to be used in a decoding/reconstruction process. For example, a parameter generated and transmitted by the transmission device may be acquired by a metadata parser of the reception device.

According to embodiments, the present disclosure may define signaling of geometry compression-related information required for a method of sampling target points for global motion estimation considering a data distribution.

According to embodiments, the SPS may signal that global motion estimation is performed on the basis of non-uniform point sampling, all or part of information necessary for the signaling is carried in the SPS according to an implementation method, and corresponding information may be carried in the GPS, the geometry slice header, the SEI message, or the like. According to embodiments, the geometry compression-related information may be defined at a corresponding position or a separate position depending on the application or system to use a different application range, a different application method, and the like. In addition, when the information including the similar function is signaled in a higher level, the signaling may be omitted in the parameter set of the sub-concept. In addition, when a syntax element defined below is applicable to a plurality of point cloud data streams as well as the current point cloud data stream, the geometry compression-related information may be carried in a parameter set of a higher concept, or the like.

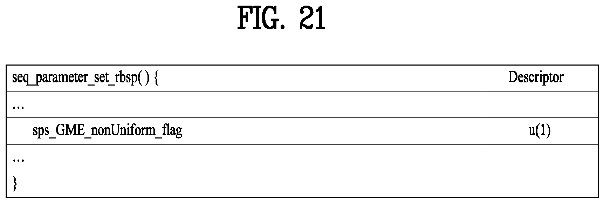

A field, a term used in syntaxes of the present specification described below, may have the same meaning as a parameter or a syntax element. FIG. 21 illustrates a syntax structure of a sequence parameter set (SPS) (seq_parameter_set_rbsp()) according to an embodiment of the present disclosure. The SPS may contain sequence information about the point cloud data bitstream. In particular, in this example, the SPS may contain geometry compression-related information. That is, the geometry compression-related information required for a method of sampling target points for global motion estimation considering the data distribution may be added to the SPS and signaled.

The SPS according to the embodiments may contain an sps_GME_nonUniform_flag field.

The sps_GME_nonUniform_flag may indicate whether to perform non-uniform sampling in global motion estimation. When the value of the sps_GME_nonUniform_flag field is TRUE, it may indicate that points are non-uniformly sampled according to the degree of point density at the current point in the global motion estimation. When the value is FALSE, it may indicate that all points are sampled in a uniform manner as in conventional cases.

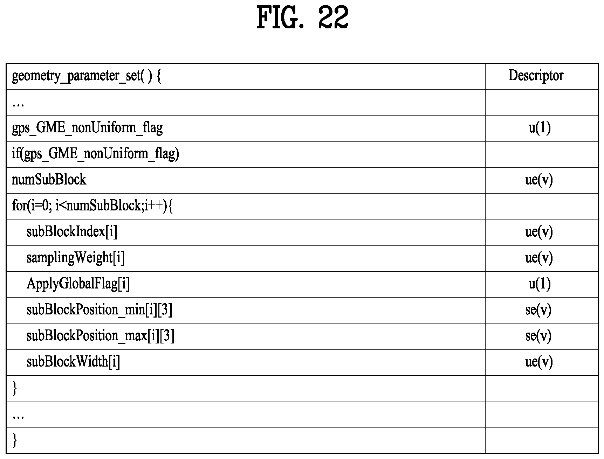

FIG. 22 illustrates a syntax structure of a geometry parameter set (GPS) (geometry_parameter_set ()) according to an embodiment of the present disclosure. The GPS according to the embodiments may contain information about a method of encoding geometry information about point cloud data contained in one or more slices.

The GPS according to the embodiments may contain geometry compression-related information. That is, the geometry compression-related information required for a method of sampling target points for global motion estimation considering the data distribution may be added to the GPS and signaled.

The geometry compression-related information may include a gps_GME_nonUniform_flag field.

In the GPS, the gps_GME_nonUniform_flag field may indicate whether to perform non-uniform sampling in global motion estimation. When the value of the gps_GME_nonUniform_flag field is TRUE, it may indicate that points are non-uniformly sampled according to the degree of point density at the current point in the global motion estimation. When the value is FALSE, it may indicate that all points are sampled in a uniform manner as in conventional cases. The value of the sps_GME_nonUniform_flag field may be received and input as the value of the gps_GME_nonUniform_flag field, or a different value of the gps_GME_nonUniform_flag field may be input for each frame.

When the value of the gps_GME_nonUniform_flag field is TRUE, the geometry compression-related information may include a numSubBlock field.

The numSubBlock indicate the number of sub-blocks for grouping (or splitting) the points of the point cloud data when non-uniform sampling is performed in the global motion estimation.

The geometry compression-related information may include a loop that iterates as many times as the value of numSubBlock field (i.e., the number of sub-blocks). In an embodiment, i is initialized to 0, incremented by 1 each time the iteration is performed, and the loop iterates until i reaches the value of the numSubBlock field. The loop may include a subBlockIndex[i] field, a samplingWeight[i] field, an ApplyGlobalFlag[i] field, a subBlockPosition_min[i][3] field, a subBlockPosition_max[i][3] field, a subBlockWidth[i] field.

The subBlockIndex[i] field may indicate an index of each sub-block when the points of the point cloud data are grouped into sub-blocks as many as the value of the numSubBlock field.

The samplingWeight[i] field indicates a weight required to determine the number of points to be sampled in a sub-block indicated by the value of the subBlockIndex[i] field. The value of the samplingWeight[i] field may be in the range of 0 to 1.

The ApplyGlobalFlag[i] field may indicate whether to apply a result of the global motion estimation to a sub-block indicated by the value of the subBlockIndex[i] field. When the value of the ApplyGlobalFlag[i] field is TRUE, it may indicate that the global motion matrix is applied to the corresponding sub-block. When the value is FALSE, it may indicate the global motion matrix is not applied.

The subBlockPosition _min[i][3] field may indicate a point closest to the origin among the vertices of the sub-block indicated by the value of the subBlockIndex[i] field.

The subBlockPosition _max[i][3] field may indicate a point farthest from the origin among the vertices of the sub-block indicated by the value of the subBlockIndex[i] field.

The subBlockWidth[i] field may indicate the width of the corresponding sub-block from the subBlockPosition_min[i][3] in order to calculate the remaining vertices based on the minimum value (min) and the maximum value (max) of the sub-block indicated by the value of the subBlockIndex[i] field.

In the present disclosure, the subBlockIndex[i] field, samplingWeight[i] field, ApplyGlobalFlag[i] field, subBlock-Position _min[i][3] field, subBlockPosition_max[i][3] field, and subBlockWidth[i] field are referred to as sub-block information.

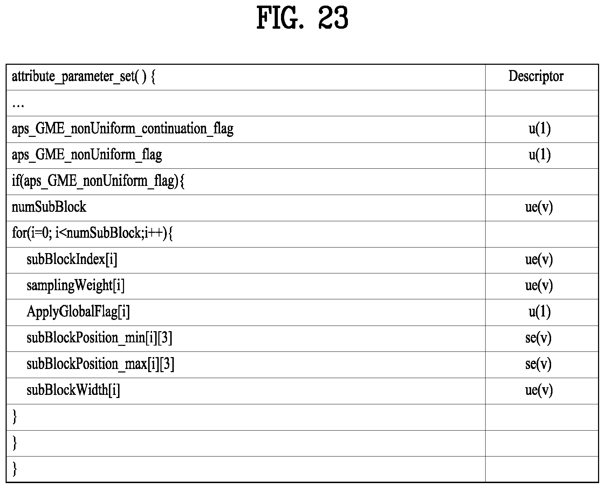

FIG. 23 illustrates a syntax structure of an attribute parameter set (APS) (attribute_parameter_set ()) according to an embodiment of the present disclosure. The APS according to the embodiments may contain information about a method of encoding attribute information about point cloud data contained in one or more slices.

The APS according to the embodiments may contain attribute compression-related information. That is, the attribute compression-related information required for a method of sampling target points for global motion estimation considering the data distribution may be added to the APS and signaled.

The attribute compression-related information may include an aps_GME_nonUniform_continuation_flag field and an aps_GME_nonUniform_flag field.

The aps_GME_nonUniform_continuation _flag field may indicate whether to receiver, from the APS, and use a point sampling method (that is, whether to perform non-uniform point sampling or uniform point sampling) applied in the GPS in the global motion estimation of the attribute. When the value of the aps_GME_nonUniform_continuation_flag field is TRUE, in may indicate that information applied in non-uniformly sampling points of the point cloud data according to the point density at the current point in global motion estimation in the geometry coding is received and applied. When the value is FALSE, it may indicate that coding is performed independently from the geometry coding in the global motion estimation.

The aps_GME_nonUniform_flag field may indicate, in the APS, whether to perform non-uniform sampling in the global motion estimation. When the value of the aps_GME_nonUniform_flag field is TRUE, it may indicate that points are non-uniformly sampled according to the point density at the current point when the global motion is estimated. When the value is FALSE, it may indicate that all points are uniformly sampled as in the conventional method. The value of the sps_GME_nonUniform_flag field may be received and input as the value of the aps_GME_nonUniform_flag field, or a different value of the aps_GME_nonUniform_flag field may be input for each frame. When the value of the aps_GME_nonUniform_continuation_flag field is TRUE, the sub-block information may be received and applied from the GPS.

When the value of the aps_GME_nonUniform_flag field is TRUE, the attribute compression-related information may include a numSubBlock field.

The numSubBlock indicate the number of sub-blocks for grouping (or splitting) the points of the point cloud data when non-uniform sampling is performed in the global motion estimation.

The attribute compression-related information may include a loop that iterates as many times as the value of numSubBlock field (i.e., the number of sub-blocks). In an embodiment, i is initialized to 0, incremented by 1 each time the iteration is performed, and the loop iterates until i reaches the value of the numSubBlock field. The loop may include a subBlockIndex[i] field, a samplingWeight[i] field, an ApplyGlobalFlag[i] field, a subBlockPosition_min[i][3] field, a subBlockPosition_max[i][3] field, a subBlockWidth[i] field.

In the present disclosure, the subBlockIndex[i] field, samplingWeight[i] field, ApplyGlobalFlag[i] field, subBlock-Position _min[i][3] field, subBlockPosition_max[i][3] field, and subBlockWidth[i] field are referred to as sub-block information.

For the description of the subBlockIndex[i] field, samplingWeight[i] field, ApplyGlobalFlag[i] field, subBlockPosition _min[i][3] field, subBlockPosition_max[i][3] field, and subBlockWidth[i] included in the sub-block information, which will be omitted in order to avoid redundancy, refer to FIG. 22.

According to embodiments, the geometry data unit (geometry _data _unit()) includes geometry_data_unit_header( ), byte_alignment(), and geometry_data_unit_footer().

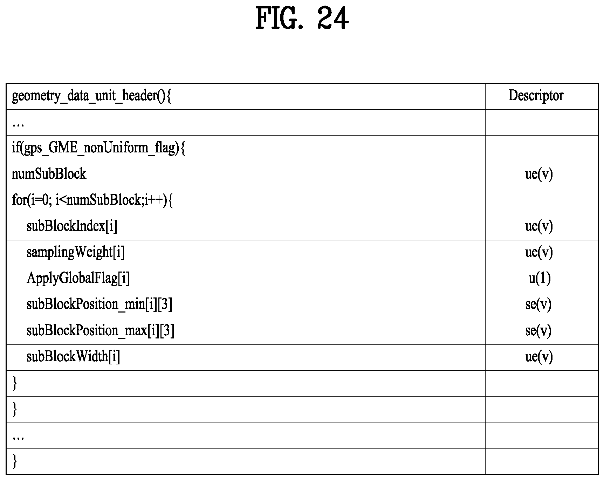

FIG. 24 illustrates an example of a syntax structure of a geometry data unit header (geometry _data_unit_header()) according to embodiments. The geometry _data_unit_header() of FIG. 24 may contain geometry compression-related information. That is, the geometry compression-related information required for a method of sampling target points for global motion estimation considering the data distribution may be added to the geometry data unit header (or geometry slice header) and signaled.

When the value of the gps_GME_nonUniform_flag field contained in the GPS is TRUE, the geometry data unit header may contain a numSubBlock field.

The numSubBlock indicate the number of sub-blocks for grouping (or splitting) the points of the point cloud data when non-uniform sampling is performed in the global motion estimation.

The geometry compression-related information may include a loop that iterates as many times as the value of numSubBlock field (i.e., the number of sub-blocks). In an embodiment, i is initialized to 0, incremented by 1 each time the iteration is performed, and the loop iterates until i reaches the value of the numSubBlock field. The loop may include a subBlockIndex[i] field, a samplingWeight[i] field, an ApplyGlobalFlag[i] field, a subBlockPosition_min[i][3] field, a subBlockPosition_max[i][3] field, a subBlockWidth[i] field.

In the present disclosure, the subBlockIndex[i] field, samplingWeight[i] field, ApplyGlobalFlag[i] field, subBlock-

Position _min[i][3] field, subBlockPosition_max[i][3] field, and subBlockWidth[i] field are referred to as sub-block information.

For the description of the subBlockIndex[i] field, samplingWeight[i] field, ApplyGlobalFlag[i] field, subBlockPosition _min[i][3] field, subBlockPosition_max[i][3] field, and subBlockWidth[i] included in the sub-block information, which will be omitted in order to avoid redundancy, refer to FIG. 22.

FIG. 25 illustrates another example of a point cloud reception device according to embodiments. The elements of the point cloud reception device illustrated in FIG. 25 may be implemented by hardware, software, a processor, and/or a combination thereof.

According to embodiments, the point cloud data reception device may include a reception processor 61001, a signaling processor 61002, the geometry decoder 61003, an attribute decoder 61004, and a post-processor 61005.

The reception processor 61001 may receive one bitstream or may receive each of a geometry bitstream, an attribute bitstream, and a signaling bitstream. Upon receiving a file and/or a segment, the reception processor 61001 may decapsulate the received file and/or segment and output a bitstream therefor.

When receiving (or decapsulating) one bitstream, the reception processor 61001 may demultiplex a geometry bitstream, an attribute bitstream, and/or a signaling bitstream from one bitstream, output the demultiplexed signaling bitstream to the signaling processor 61002, output the geometry bitstream to the geometry decoder 61003, and output the attribute bitstream to the attribute decoder 61004.

When receiving (or decapsulating) a geometry bitstream, an attribute bitstream, and/or a signaling bitstream, the reception processor 61001 may deliver the signaling bitstream to the signaling processor 61002, deliver the geometry bitstream to the geometry decoder 61003, and deliver the attribute bitstream to the attribute decoder 61004.

The signaling processor 61002 may parse and process information included in signaling information, e.g., SPS, GPS, APS, TPS, and metadata in the input signaling bitstream and provide the parsed and processed information to the geometry decoder 61003, the attribute decoder 61004, and the post-processor 61005. According to another embodiment, signaling information included in the geometry data unit header and/or the attribute data unit header may be pre-parsed by the signaling processor 61002 prior to decoding of corresponding slice data.

According to embodiments, the signaling processor 61002 may also parse and process signaling information (e.g., geometry compression-related information) signaled in the GPS and/or the geometry data unit header and provide the parsed and processed information to the geometry decoder 61003.

According to embodiments, the geometry decoder 61003 may perform a reverse process to the operations of the geometry encoder 51003 of FIG. 16 based on signaling information (e.g., geometry compression-related information) for the compressed geometry bitstream to reconstruct geometry. The geometry information restored (or reconstructed) by the geometry decoder 61003 is provided to the attribute decoder 61004. The attribute decoder 61004 may restore an attribute by performing a reverse process of the attribute encoder 51004 of FIG. 16 based on signaling information and reconstructed geometry information for the compressed attribute bitstream.

According to embodiments, the post-processor 61005 may reconstruct point cloud data by matching geometry information (i.e., positions) restored and output from the geometry decoder 61003 with attribute information restored and output from the attribute decoder 61004 and display/render the matched information.

FIG. 26 illustrates an example of a geometry decoding process of the geometry decoder 61003 according to embodiments.

The elements (or blocks) shown in FIG. 26 may be implemented as hardware, software, a processor, and/or a combination thereof. In FIG. 24, the order of performing the elements may be changed, some elements may be omitted, and some elements may be newly added.

According to embodiments, once a bitstream is acquired by the reception processor 61001, the geometry compression-related information described with reference to FIGS. 21 to 24 may be acquired.

According to embodiments, the geometry decoder 61003 restores the geometry information by performing an inverse process to the operations of the geometry encoder of the transmission device.

That is, in operation 65001, entropy decoding is performed on the input bitstream through the reception processor 61001.

In operation 65002, it is determined whether to apply the intra-prediction to the geometry information contained in the bitstream on which the entropy decoding has been performed. Here, whether to apply the intra-prediction may be provided from the transmitting side as the geometry compression-related information included in the signaling information or may be preset.

When it is determined that the intra-prediction is to be performed in operation 65002, the intra-frame prediction is performed on the received geometry information in operation 65011.

When it is determined that the inter-prediction is to be performed in operation 65002, it is determined whether to apply global motion for the inter-prediction (operation 65003). Here, whether to apply the global motion may be provided as signaling information, or may be preset. Whether to apply the global motion in operation 65003 is about whether to apply the global motion to the entire point cloud data. When it is determined that the sampling is non-uniformly performed, the global motion may or may not be applied on a per sub-block basis.

When it is determined in operation 65003 that the global motion is not applied, local motion compensation is performed on the received geometry information based on the received signaling information in operation 65008.

When it is determined in operation 65003 that the global motion is applied, it is determined whether the received geometry information has been subjected to non-uniform sampling for each sub-block (operation 65004). Here, whether non-uniform sampling has been performed for each sub-block may be provided as signaling information, or may be preset. According to an embodiment of the present disclosure, whether non-uniform sampling has been performed for each sub-block is identified by the sps_GME_nonUniform_flag field and/or gps_GME_nonUniform_flag field, which are included in the received geometry compression-related information.

When it is determined in operation 65004 that non-uniform sampling has not been performed for each sub-block, global motion compensation is performed on the received geometry information in operation 65007, and local motion compensation is performed in operation 65008.

When it is determined in operation 65004 that that non-uniform sampling has been performed for each sub-block, the received geometry information is split into a plurality of sub-blocks (operation 65005). Here, the number of split sub-blocks may be provided as signaling information, or may be preset. According to an embodiment of the present disclosure, the number of split sub-blocks is identified by the numSubBlock field included in the received geometry compression-related information.

Also, in operation 65006, it is determined whether to apply global motion estimation for each sub-block split in operation 65005. Here, whether to apply the global motion estimation may be provided as signaling information, or may be preset. According to an embodiment of the present disclosure, whether to apply the global motion estimation is identified by the ApplyGlobalFlag field included in the received geometry compression-related information.

When it is determined in operation 65005 that the global motion estimation is applied to the corresponding sub-block, the global motion compensation is performed on the corresponding sub-block in operation 65007.

When it is determined in operation 65005 that the global motion estimation is not applied to the corresponding sub-block, the local motion compensation is performed on the corresponding sub-block in operation 65008.

When the local motion compensation is completed in operation 65008, the remaining inter-prediction function is applied in operation 65009.

For the geometry information on which the inter-prediction has been performed in operation 65009 or the geometry information on which the intra-frame prediction has been performed in operation 65011, reconstruction of the geometry information may be performed in operation 65010 to output reconstructed points.

As described above, the geometry decoder 61003 performs entropy decoding on the received bitstream. When the frame having geometry information contained in the entropy-decoded bitstream is a frame for intra-prediction, the existing method for intra-prediction is applied, and then the geometry information about the point cloud is updated. When the frame is not a frame for intra-prediction, it is checked whether to apply the global motion. When the global motion is applied, it is determined whether the entropy-decoded geometry information is non-uniformly sampled for the motion estimation. In this case, when a result of the non-uniform sampling is applied, the entropy-decoded geometry information is split into a plurality of sub-blocks, and then whether the global motion is applied to each sub-block is checked. Then, global motion compensation is performed on the corresponding sub-block according to a result of the checking. When it is determined that the motion is estimated with uniform sampling on the transmitting side, global motion compensation is performed on the entropy-decoded geometry information, and then local motion compensation is performed. After the local motion compensation is completed, the remaining inter-prediction function is applied, and the geometry information on which the inter-prediction has been performed is reconstructed. That is, in operation 65010, the geometry information (i.e., the positions of the final points) is reconstructed (or restored) based on the information predicted through inter-prediction or intra-prediction and residual information included in the entropy decoded geometry information. The reconstructed points may then be sent to the attribute decoder 61004 for use in the attribute information prediction.

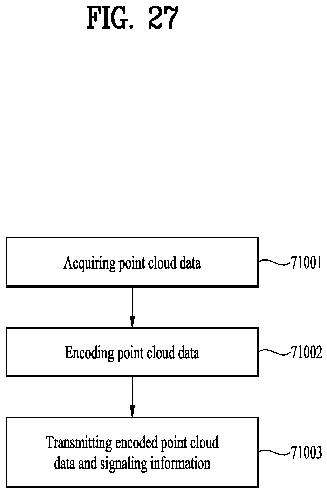

FIG. 27 is a flowchart illustrating a point cloud data transmission method according to embodiments.

The point cloud data transmission method according to the embodiments may include operation 71001 of acquiring point cloud data, operation 71002 of encoding the point cloud data, and operation 71003 of transmitting the encoded point cloud data and signaling information. In this case, a bitstream containing the encoded point cloud data and the signaling information may be encapsulated and transmitted as a file.

In operation 71001 of acquiring the point cloud data, some or all of the operations of the point cloud video acquisition unit 10001 of FIG. 1 may be performed, or some or all of the operations of the data input unit 12000 of FIG. 12 may be performed.

In operation 71002 of encoding the point cloud data, some or all of the operations of the point cloud video encoder 10002 of FIG. 1, the encoding 20001 of FIG. 2, the point cloud video encoder of FIG. 4, the point cloud video encoder of FIG. 12, the geometry encoder of FIG. 16, the geometry encoding process of FIG. 18, or the geometry encoding of FIG. 19 may be performed to encode the geometry information.

In operation 71002, points of the input point cloud data are split into a plurality of sub-groups, and the number of points to be sampled in each of the split sub-groups is calculated to perform sampling. After determining whether to apply the global motion matrix for each of the sub-groups, the geometry information is compressed by performing global motion estimation and/or local motion estimation.

For details of splitting the points of the point cloud data (or object) into a plurality of sub-groups (or sub-blocks or blocks) and performing global motion estimation based on the split points, which will not be described below, refer to the description of FIGS. 15 to 24. The geometry information (e.g., residual information and/or prediction mode information) about each of the compressed points is entropy-encoded and then output in the form of a geometry bitstream.

According to embodiments, in operation 71002 of encoding the point cloud data, attribute information is compressed based on positions on which geometry encoding has not been performed and/or reconstructed geometry information. In one embodiment, the attribute information may be coded using any one or a combination of one or more of RAHT coding, LOD-based predictive transform coding, and lifting transform coding.

In the present disclosure, the signaling information may include geometry compression related information. In one embodiment, the geometry compression related information is contained in a geometry data unit header. In another embodiment, the geometry compression-related information may be signaled in the SPS, GPS, or APS. The details of the geometry compression related information have been described above and will not be described below.

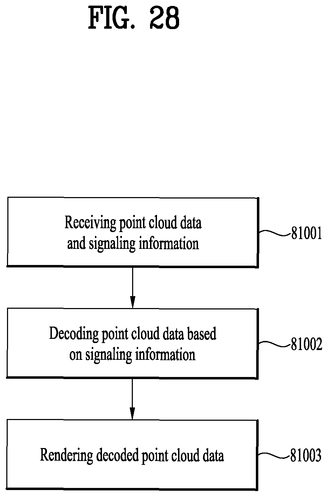

FIG. 28 is a flowchart illustrating a point cloud data reception method according to embodiments.

The point cloud data reception method according to the embodiments may include operation 81001 of receiving encoded point cloud data and signaling information, operation 81002 of decoding the point cloud data based on the signaling information, and operation 81003 of rendering the decoded point cloud data.

Operation 81001 of receiving the point cloud data and signaling information may be performed by the receiver 10005 of FIG. 1, the transmission 20002 or decoding 20003 of FIG. 2, or the receiver 13000 or reception processor 13001 of FIG. 13.

In operation 81002 of decoding the point cloud data, some or all of the operations of the point cloud video decoder 10006 of FIG. 1, the decoding 20003 of FIG. 2, the point cloud video decoder of FIG. 11, the point cloud video decoder of FIG. 13, the geometry decoder of FIG. 25, or the geometry decoding of FIG. 26 to decode the geometry information.

In operation 81002 of decoding the point cloud data according to the embodiments, the received compressed geometry information may be decoded (i.e., reconstructed) by performing global motion compensation and/or local motion compensation for each sub-block based on the geometry compression-related information included in the signaling information. For details, refer to the description of FIGS. 15 to 26.

In operation 81002 of decoding the point cloud data, attribute information may be decoded (i.e., decompressed) based on the reconstructed geometry information. In one embodiment, the attribute information may be decoded using any one or a combination of one or more of RAHT coding, LOD-based predictive transform coding, and lifting transform coding.

In operation 81003 of rendering, point cloud data may be reconstructed based on the reconstructed (or restored) geometry information and attribute information and rendered according to various rendering methods. For example, points in the point cloud content may be rendered as a vertex having a certain thickness, a cube having a specific minimum size centered on the corresponding vertex position, or a circle centered on the corresponding vertex position. All or some regions of the rendered point cloud content is provided to the user through a display (e.g., a VR/AR display, a general display, etc.). Operation 81003 of rendering the point cloud data may be performed by the renderer 10007 of FIG. 1, the rendering 20004 of FIG. 2, or the renderer 13011 of FIG. 13.

As described above, a non-uniform sampling method and a method of determining whether to apply a global motion matrix have been proposed for global motion estimation and global motion compensation of inter-frame motion prediction of point cloud content. Accordingly, on the transmitting side, points of the point cloud data may be split into a plurality of sub-blocks and different numbers of points may be sampled in the sub-blocks according to the number of points contained in the corresponding sub-block. In particular, by sampling more points in a sub-block containing points at a more important position, the accuracy of global motion estimation may be improved. In addition, on the receiving side, the global motion compensation may be applied differently in each sub-block depending on whether to apply the result of the global motion estimation to each sub-block, thereby reducing the bitstream size and the decoding time compared to determining whether the global motion compensation is applied for each local PU.

The aforementioned operation according to embodiments may be performed through components of the point cloud transmitting and receiving device/method including a memory and/or a processor. The memory may store programs for processing/controlling operations according to embodiments. Each component of the point cloud transmitting and receiving device/method according to embodiments may correspond to hardware, software, a processor, and/or a combination thereof. The processor may control the various operations described in the present disclosure. The processor may be referred to as a controller or the like. The operations according to embodiments may be performed by firmware, software, and/or a combination thereof and firmware, software, and/or a combination thereof may be stored in the processor or stored in the memory. In the present embodiment, the method of compressing geometry information of point cloud data has been described, but the methods described in the specification may be applied to attribute information compression and other compression methods.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if' and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

Additionally, the operations according to the embodiments described in this document may be performed by transmitting and receiving devices, each of which includes a memory and/or processor, depending on the embodiments. The memory may store programs for processing and controlling the operations according to the embodiments, and the processor may control various operations described in this document. The processor may be referred to as a controller or the like. The operations according to the embodiments may be implemented by firmware, software, and/or combinations thereof, and the firmware, software, and/or combinations thereof may be stored in the processor or memory.

[Mode for Disclosure]

The details have been specifically described in the best mode for the disclosure.

[Industrial Applicability]

It will be apparent to those skilled in the art that various modifications and variations are possible without departing from the spirit or scope of the embodiments. Thus, it is intended that the embodiments cover the modifications and variations of the embodiments provided they come within the appended claims and their equivalents.

**Claims**

1.  A method of transmitting point cloud data, the method comprising:

    encoding the point cloud data; and
    transmitting the encoded point cloud data and signaling information,
    wherein the encoding of the point cloud data comprises:

       splitting points of the point cloud data into a plurality of sub-groups;
       setting a number of points to be sampled for each of the split sub-groups; and
       compressing the point cloud data by performing sampling for each of the sub-groups based on the set number of points to be sampled in each of the sub-groups.

2.  The method of claim 1, wherein the splitting comprises:
    splitting the points of the point cloud data into a plurality of sub-groups based on a z-axis.

3.  The method of claim 2, wherein the setting comprises:
    setting the number of points to be sampled for each of the split sub-groups based on a total number of points of the point cloud data, a number of points contained in each of the sub-groups, and a total number of points to be sampled in the point cloud data.

4.  The method of claim 3, wherein the compressing comprises:
    determining whether to apply a global motion matrix to a corresponding one of the sub-groups based on the number of points contained in each of the sub-groups.

5. The method of claim 4, wherein the signaling information comprises:

   information for identifying whether non-uniform sampling is applied to at least the point cloud data;
   information for identifying the number of the split sub-groups; and
   information for identifying, for each of the sub-groups, whether the global motion matrix is applied to the corresponding one of the sub-groups.

6. A device for transmitting point cloud data, the method comprising:

   an encoder configured to encode the point cloud data; and
   a transmitter configured to transmit the encoded point cloud data and signaling information,
   wherein the encoder is configured to:

   split points of the point cloud data into a plurality of sub-groups;
   set a number of points to be sampled for each of the split sub-groups; and
   compress the point cloud data by performing sampling for each of the sub-groups based on the set number of points to be sampled in each of the sub-groups.

7. The device of claim 6, wherein the encoder splits the points of the point cloud data into a plurality of sub-groups based on a z-axis.

8. The device of claim 7, wherein the encoder sets the number of points to be sampled for each of the split sub-groups based on a total number of points of the point cloud data, a number of points contained in each of the sub-groups, and a total number of points to be sampled in the point cloud data.

9. The device of claim 3, wherein the encoder determines whether to apply a global motion matrix to a corresponding one of the sub-groups based on the number of points contained in each of the sub-groups.

10. The device of claim 9, wherein the signaling information comprises:

    information for identifying whether non-uniform sampling is applied to at least the point cloud data;
    information for identifying the number of the split sub-groups; and
    information for identifying, for each of the sub-groups, whether the global motion matrix is applied to the corresponding one of the sub-groups..

11. A method of receiving point cloud data, the method comprising:

    receiving the point cloud data and signaling information;
    decoding the point cloud data based on the signaling information; and
    rendering the decoded point cloud data,
    wherein the decoding of the point cloud data comprises:

    splitting the received point cloud data into a plurality of sub-groups based on the signaling information; and
    performing decoding for each of the split sub-groups.

12. The method of claim 11, wherein the decoding comprises:

    determining whether a global motion matrix is applied to a corresponding one of the sub-groups based on the signaling information; and
    performing global motion compensation on the corresponding one of the sub-groups based on a result of the determination.

13. The method of claim 12, wherein the decoding further comprises:
    performing local motion compensation on the corresponding sub-group on which the global motion compensation has been performed.

14. The method of claim 12, wherein the signaling information comprises:

information for identifying whether non-uniform sampling has been applied to at least the point cloud data;
information for identifying the number of the split sub-groups; and
information for identifying, for each of the sub-groups, whether the global motion matrix is applied to the corresponding one of the sub-groups.

15. The method of claim 14, wherein the signaling information further comprises index information for identifying each of the sub-groups.

# FIG. 1

# FIG. 2

Acquisition (20000) → Ply file -geometry -attribute → Encoding (20001) → Encoded -geometry -attribute bitstream → Transmission (20002) → Decoding (20003) → Decoded -geometry -attribute → Rendering (20004)

Feedback (20005)

Head orientation information, viewport information

Head orientation information, viewport information

FIG. 3

# FIG. 4

# FIG. 5

z

y

$2^{depth}$

0

$2^{depth}$

x

# FIG. 6

# FIG. 7

$$1 + 2 + 4 + 8 = 15$$

## FIG. 8

Level of details

# FIG. 9

# FIG. 10

# FIG. 11

# FIG. 12

Data input unit — 12000

Position values of points

Attribute values of points — 12007

Set value, etc.

Quantization processor — 12001

Metadata processor

Color transform processor — 12008

Voxelization processor — 12002

Attribute transform processor — 12009

Octree occupancy code generator — 12003

Prediction/lifting/RAHT transform processor — 12010

Surface model processor — 12004

Arithmetic coder — 12011

Intra/inter-coding processor — 12005

Arithmetic coder — 12006

Sharing reconstructed position values

Transmission processor — 12012

# FIG. 13

Receive

↓

13000 — Receiver

↓

13001 — Reception processor

Geometry bitstream          Attribute bitstream

Set value, etc.          13006

13002 — Arithmetic decoder    Metadata parser    Arithmetic decoder — 13007

13003 — Occupancy code-based octree reconstruction processor    Inverse quantization processor — 13008

13004 — Surface model processor (triangle reconstruction, up-sampling, voxelization)    Prediction /lifting/RAHT inverse transform processor — 13009

13005 — Inverse quantization processor    Color inverse transform processor — 13010

Sharing reconstructed position values

Renderer — 13011

↓

# FIG. 14

Home Appliance —17500

17600— AI Server

Smartphone —17400

17300

17000

Cloud Network
( 5G )

XR device

17100— Robot

HMD —17700

Self - Driving Vehicle —17200

# FIG. 15

GOF(Group Of Frame)

# FIG. 16

# FIG. 17

NumsubBlock3 = 10

NumsubBlock2 = 5000

NumsubBlock1 = 8000

NumsubBlock0 = 358

numSubBlock = 4
totalNumObject = 13368
totalSamplingPoint = 100

# FIG. 18

# FIG. 19

Intput
data

↓

Data
Quantization/
Voxelization — 55001

↓ 55002

Y ← IsInitra?

N ↓ 55003

Global Motion
Enable ──N──→ Local motion
estimation — 55004

Y ↓ 55007 ↓

Asym
metic_samp
ling? ──Y──→ Asymmetic
sampling — 55008

N ↓ Local motion
compensation — 55005

↓

Inter prediction — 55006

Intra frame
prediction — 55012

uniform
sampling — 55009

↓

Global motion
estimation — 55010

↓

Global motion
compensation — 55011

↓

Entropy coding — 55013

↓

Outprt
bitstream

FIG. 20

slice 0

slice n

SPS | GPS | APS$_0$ | APS$_1$ | TPS | Geom$_0^0$ | Attr$_0^0$ | Attr$_1^0$ | $\cdots$ | Geom$_0^n$ | Attr$_0^n$ | Attr$_1^n$ |

Geom_slice_header | Geom_slice_data

Attr_slice_header | Attr_slice_data

# FIG. 21

| seq_parameter_set_rbsp( ) { | Descriptor |
|---|---|
| … | |
|     sps_GME_nonUniform_flag | u(1) |
| … | |
| } | |

# FIG. 22

| geometry_parameter_set( ) { | Descriptor |
|---|---|
| … | |
| gps_GME_nonUniform_flag | u(1) |
| if(gps_GME_nonUniform_flag) | |
| numSubBlock | ue(v) |
| for(i=0; i<numSubBlock;i++){ | |
| subBlockIndex[i] | ue(v) |
| samplingWeight[i] | ue(v) |
| ApplyGlobalFlag[i] | u(1) |
| subBlockPosition_min[i][3] | se(v) |
| subBlockPosition_max[i][3] | se(v) |
| subBlockWidth[i] | ue(v) |
| } | |
| … | |
| } | |

# FIG. 23

| attribute_parameter_set( ) { | Descriptor |
|---|---|
| ... | |
| aps_GME_nonUniform_continuation_flag | u(1) |
| aps_GME_nonUniform_flag | u(1) |
| if(aps_GME_nonUniform_flag){ | |
| numSubBlock | ue(v) |
| for(i=0; i<numSubBlock;i++){ | |
|    subBlockIndex[i] | ue(v) |
|    samplingWeight[i] | ue(v) |
|    ApplyGlobalFlag[i] | u(1) |
|    subBlockPosition_min[i][3] | se(v) |
|    subBlockPosition_max[i][3] | se(v) |
|    subBlockWidth[i] | ue(v) |
| } | |
| } | |
| } | |

# FIG. 24

| geometry_data_unit_header(){ | Descriptor |
|---|---|
| ... | |
| if(gps_GME_nonUniform_flag){ | |
| numSubBlock | ue(v) |
| for(i=0; i<numSubBlock;i++){ | |
|    subBlockIndex[i] | ue(v) |
|    samplingWeight[i] | ue(v) |
|    ApplyGlobalFlag[i] | u(1) |
|    subBlockPosition_min[i][3] | se(v) |
|    subBlockPosition_max[i][3] | se(v) |
|    subBlockWidth[i] | ue(v) |
| } | |
| } | |
| ... | |
| } | |

# FIG. 25

# FIG. 26

bitstream

↓

| Entropy<br>decoding | ~65001 |

↓ 65002

IsIntra? ——Y——→ (to Intra frame prediction)

↓ N 65003

Global Enable<br>? ——N——→

↓ Y 65004

non-<br>uniform samp<br>ling? ——Y——→ 65005

↓ N

| Split subBlock | 65005 |

↓ 65006

Apply<br>global motion<br>? ——Y——→

↓ N

65007

| Global motion<br>compensation |

↓

| Local motion<br>compensation | ~65008 |

↓

| Intra frame<br>prediction | 65011 |    | Inter frame<br>prediction | ~65009 |

↓

| reconstruction | ~65010 |

↓

Reconstructed<br>points

63

# FIG. 27

```
┌─────────────────────────────────┐
│   Acquiring point cloud data    │───71001
└─────────────────────────────────┘
                 │
                 ▼
┌─────────────────────────────────┐
│    Encoding point cloud data    │───71002
└─────────────────────────────────┘
                 │
                 ▼
┌─────────────────────────────────┐
│  Transmitting encoded point cloud│
│  data and signaling information  │───71003
└─────────────────────────────────┘
```

# FIG. 28

```
┌─────────────────────────────┐
│  Receiving point cloud data │ ⟋81001
│  and signaling information   │
└─────────────────────────────┘
              │
              ▼
┌─────────────────────────────┐
│ Decoding point cloud data based │ ⟋81002
│   on signaling information   │
└─────────────────────────────┘
              │
              ▼
┌─────────────────────────────┐
│ Rendering decoded point cloud data │ ⟋81003
└─────────────────────────────┘
```

<table>
<tr><td colspan="2" align="center">**INTERNATIONAL SEARCH REPORT**</td><td colspan="2">International application No.<br>**PCT/KR2022/016047**</td></tr>
<tr><td colspan="4">**A.    CLASSIFICATION OF SUBJECT MATTER**<br>**H04N 19/54**(2014.01)i; **H04N 19/513**(2014.01)i; **H04N 19/172**(2014.01)i; **H04N 19/132**(2014.01)i; **H04N 19/70**(2014.01)i<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br>    H04N 19/54(2014.01); G06T 15/06(2011.01); G06T 17/00(2006.01); G06T 3/40(2006.01); G06T 7/12(2017.01); G06T 7/136(2017.01); G06T 9/40(2006.01); H04N 19/52(2014.01)</td></tr>
<tr><td colspan="4">Documentation searched other than minimum documentation to the extent that such documents are included in the fields searched<br>    Korean utility models and applications for utility models: IPC as above<br>    Japanese utility models and applications for utility models: IPC as above</td></tr>
<tr><td colspan="4">Electronic data base consulted during the international search (name of data base and, where practicable, search terms used)<br>    eKOMPASS (KIPO internal) & keywords: 포인트 클라우드(point cloud), 시그널링(signaling), 서브(sub), 그룹(group), 분할 (partition), 샘플링(sampling)</td></tr>
</table>

**C.    DOCUMENTS CONSIDERED TO BE RELEVANT**

| Category* | Citation of document, with indication, where appropriate, of the relevant passages | | Relevant to claim No. |
|---|---|---|---|
| X<br>Y<br>A | WO 2021-145573 A1 (LG ELECTRONICS INC.) 22 July 2021.<br>    See paragraphs [0045], [0050], [0062] and [0099]; claims 1-2; and figures 1 and 6. | | 11<br>1-3,6-8,12-13<br>4-5,9-10,14-15 |
| Y | US 2021-0192798 A1 (BLACKBERRY LIMITED) 24 June 2021 (2021-06-24)<br>    See paragraphs [0104]-[0105]; and claim 4. | | 12-13 |
| Y | US 2021-0183068 A1 (PEKING UNIVERSITY SHENZHEN GRADUATE SCHOOL) 17 June 2021 (2021-06-17)<br>    See paragraphs [0009]-[0014] and [0055]-[0059]. | | 1-3,6-8 |
| A | US 2020-0020154 A1 (BRICSYS NV) 16 January 2020 (2020-01-16)<br>    See paragraphs [0008]-[0015]; and claims 1-11. | | 1-15 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 January 2023** | **07 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/016047**

**C.     DOCUMENTS CONSIDERED TO BE RELEVANT**

| Category* | Citation of document, with indication, where appropriate, of the relevant passages | Relevant to claim No. |
|---|---|---|
| A | US 2019-0355152 A1 (PEKING UNIVERSITY SHENZHEN GRADUATE SCHOOL) 21 November 2019 (2019-11-21)<br>   See paragraphs [0007]-[0026]; and claims 1-8. | 1-15 |

Form PCT/ISA/210 (second sheet) (July 2022)

# EP 4 422 181 A1

## INTERNATIONAL SEARCH REPORT
### Information on patent family members

International application No.

**PCT/KR2022/016047**

| Patent document cited in search report | | | Publication date (day/month/year) | Patent family member(s) | | | Publication date (day/month/year) |
|---|---|---|---|---|---|---|---|
| WO | 2021-145573 | A1 | 22 July 2021 | None | | | |
| US | 2021-0192798 | A1 | 24 June 2021 | EP | 3633621 | A1 | 08 April 2020 |
| | | | | WO | 2020-069600 | A1 | 09 April 2020 |
| US | 2021-0183068 | A1 | 17 June 2021 | CN | 109993839 | A | 09 July 2019 |
| | | | | WO | 2020-206669 | A1 | 15 October 2020 |
| US | 2020-0020154 | A1 | 16 January 2020 | EP | 3346449 | A1 | 11 July 2018 |
| | | | | EP | 3346449 | B1 | 26 June 2019 |
| | | | | US | 10885703 | B2 | 05 January 2021 |
| | | | | WO | 2018-127547 | A1 | 12 July 2018 |
| US | 2019-0355152 | A1 | 21 November 2019 | CN | 107403456 | A | 28 November 2017 |
| | | | | CN | 107403456 | B | 18 June 2019 |
| | | | | US | 10552989 | B2 | 04 February 2020 |
| | | | | WO | 2019-019680 | A1 | 31 January 2019 |

Form PCT/ISA/210 (patent family annex) (July 2022)